(19) Europäisches Patentamt
European Patent Office
Office européen des brevets

(11) EP 3 264 545 A1

(12) EUROPEAN PATENT APPLICATION
published in accordance with Art. 153(4) EPC

(43) Date of publication:
03.01.2018 Bulletin 2018/01

(51) Int Cl.:
H01T 13/54 (2006.01)  F02P 13/00 (2006.01)
H01T 13/20 (2006.01)  H01T 13/32 (2006.01)

(21) Application number: 16754905.4

(22) Date of filing: 03.02.2016

(86) International application number:
PCT/JP2016/000563

(87) International publication number:
WO 2016/136149 (01.09.2016 Gazette 2016/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 26.02.2015  JP 2015036010
02.04.2015  JP 2015075551
25.05.2015  JP 2015105326

(71) Applicant: NGK Spark Plug Co., Ltd.
Nagoya-shi, Aichi 467-8525 (JP)

(72) Inventors:
• KAMEDA, Hiroyuki
Nagoya-shi
Aichi 467-8525 (JP)
• MUKOYAMA, Naoyuki
Nagoya-shi
Aichi 467-8525 (JP)
• KASAHARA, Daisuke
Nagoya-shi
Aichi 467-8525 (JP)

(74) Representative: J A Kemp
14 South Square
Gray's Inn
London WC1R 5JJ (GB)

(54) PLASMA JET PLUG

(57) A plasma jet plug includes: a tubular insulator having an axial hole extending along an axial direction; a center electrode disposed inside the axial hole; metal shell disposed on an outer circumference of the insulator; and an orifice electrode electrically connected to the metal shell and disposed on a front side of the insulator, a plasma generating cavity being formed by a surface of the center electrode, an inner surface of the insulator, and an inner surface of the orifice electrode. In the plasma jet plug, a shortest path length D1 of a surface path is greater than or equal to 5 times an aerial gap G, the surface path extending, inside the cavity, from a surface of the center electrode via an inner surface of the insulator to an inner surface of the orifice electrode, the aerial gap G being a shortest distance between the center electrode and the orifice electrode.

FIG. 4

# Description

## RELATED APPLICATIONS

This application is based on and claims Convention priority to Japanese patent application Nos. 2015-036010, filed February 26, 2015, 2015-075551, filed April 2, 2015, and 2015-105326, filed May 25, 2015, the entire disclosure of which is herein incorporated by reference as a part of this application.

## TECHNICAL FIELD

The present invention relates to a plasma jet plug that ignites an air-fuel mixture by jetting plasma.

## BACKGROUND ART

A plasma jet plug is a spark plug having a space called "cavity" for generating plasma (Patent Document 1). An orifice electrode (also called "ground electrode") having an opening is provided at an exit of the cavity, and a center electrode is provided inside the cavity, with a gap interposed between the orifice electrode and the center electrode. The portion, other than the orifice electrode and the center electrode, of the wall surface in the cavity is constituted by an insulator. An air-fuel mixture is ignited by supplying a large current to the cavity so as to fill the cavity with a large amount of plasma, and ejecting the plasma. At the time of supplying a large current to the cavity, first, dielectric breakdown is caused by applying a high voltage between the orifice electrode and the center electrode so as to form discharge paths in the cavity, and thereafter, a large current is superposed with a low voltage.

## PRIOR ART DOCUMENT

### PATENT DOCUMENT

Patent Document 1: Japanese Patent Application Laid-Open (*kokai*) No. 2008-045449

## SUMMARY OF THE INVENTION

### PROBLEM TO BE SOLVED BY THE INVENTION

As the discharge paths in the cavity, an aerial path that is a path in a space away from the wall surface of the cavity, and a surface path that extends along the wall surface of the cavity (in particular, the surface of the insulator) may be formed. Usually, the surface path can be more easily formed than the aerial path. Once a surface path has been formed, a phenomenon called "channeling" occurs in which the insulator surface in contact with the surface path is melted to form a groove by the current generated during dielectric breakdown. When channeling occurs, the shape of the cavity is significantly changed, resulting in deterioration in the plasma ejection performance. Furthermore, discharge is concentrated at the groove formed as a result of channeling, giving rise to a problem that a deeper groove may be formed. Therefore, there is a need for a technique that is able to reduce the likelihood of occurrence of surface discharge so as to allow aerial discharge to occur in a stable manner, thus suppressing the occurrence of channeling.

The present inventor found that when the length of the exposed portion of the center electrode in the cavity is large, the area in which the center electrode is in contact with plasma is increased, which poses a problem that erosion of the center electrode caused by the heat of plasma becomes excessively significant. The present inventor also found that when the inner surface of the orifice electrode is exposed into the cavity, the inner surface of the orifice electrode undergoes excessive erosion by the heat of plasma.

## MEANS FOR SOLVING THE PROBLEM

The present invention has been made to solve the above-described problems, and can be embodied in the following modes.

(1) According to a first mode of the present invention, a plasma jet plug is provided. The plasma jet plug includes a tubular insulator having an axial hole extending along an axial direction; a center electrode disposed inside the axial hole; a metal shell disposed on an outer circumference of the insulator; and an orifice electrode electrically connected to the metal shell and disposed on a front side of the insulator, a plasma generating cavity being formed by a surface of the center electrode, an inner surface of the insulator, and an inner surface of the orifice electrode. In the plasma jet plug according to the first mode, a shortest path length D1 of a surface path is greater than or equal to 5 times an aerial gap G, the surface path extending, inside the cavity, from a surface of the center electrode via an inner surface of the insulator to an inner surface of the orifice electrode, the aerial gap G being a shortest distance between the center electrode and the orifice electrode.

With the plasma jet plug, the shortest path length D1 of the surface path is sufficiently larger than the aerial gap G. Accordingly, it is possible to reduce the likelihood of occurrence of surface discharge so as to allow aerial discharge to occur in a stable manner, thus suppressing the occurrence of channeling.

(2) In the above-described plasma jet plug, the inner surface of the insulator may include at least one groove portion that forms a recessed path on the surface path, and the groove portion may have a groove width of 0.1 mm or more.

With this configuration, it is possible to keep the capacity of the cavity small by providing the groove portion in the inner surface of the insulator, thus increasing the shortest path length D1 of the surface path while facilitating ejection of plasma. It is also possible to adjust the effective length of the shortest path length D1 of the surface path to be a length along the groove portion by setting the groove width of the groove portion to 0.1 mm or more. Accordingly, it is possible to allow aerial discharge to occur in a more stable manner.

(3) In the above-described plasma jet plug, the groove portion may have a depth that is less than or equal to 3 times the groove width.

With this configuration, by setting the depth of the groove portion to be less than or equal to 3 times the groove width, it is possible to keep the capacity of the cavity small while increasing the shortest path length D1 of the surface path, thus facilitating ejection of plasma.

(4) In the above-described plasma jet plug, a side surface of the center electrode that faces the cavity may have a surface area of 20 mm$^2$ or less.

With this configuration, by setting the surface area of the side surface of the center electrode that faces the cavity to be 20 mm$^2$ or less, it is possible to suppress a phenomenon in which plasma is cooled by the center electrode, thus facilitating ejection of plasma.

(5) In the above-described plasma jet plug, a portion of the insulator that faces the cavity may be formed of a plurality of members.

With this configuration, when a portion of the insulator that faces the cavity is formed of a plurality of members, the inner surface shape of the insulator that faces the cavity can be easily formed so as to increase the path length D1 of the surface path.

(6) In the above-described plasma jet plug, the plurality of members of the insulator may include a first member provided on an outer circumferential side of the center electrode, and a second member provided on an outer circumferential side of the first member, and the first member may be formed from a first insulating material having a higher coefficient of thermal conductivity than the second member, and the second member may be formed from a second insulating material having a higher dielectric strength than the first member.

With this configuration, the coefficient of thermal conductivity of the first member is higher than the coefficient of thermal conductivity of the second member, so that it is possible to increase the heat conduction from the center electrode by the first member, thus enhancing the durability of the center electrode. Furthermore, the dielectric strength of the second member is higher than that of the first member, so that it is possible to enhance the voltage endurance of the insulator as a whole.

(7) In the above-described plasma jet plug, a side surface of the center electrode in the cavity may be covered with an insulating material, and a distance L from a front end of the insulating material provided on the side surface of the center electrode to a front end of the center electrode may be 0.4 mm or less. With this configuration, the length L of the front end portion of the center electrode that is exposed from the insulating material is as short as 0.4 mm or less, so that it is possible to suppress the erosion of the center electrode caused by the heat of plasma.

(8) In the above-described plasma jet plug, a distance H between the side surface of the center electrode and an inner wall surface of the cavity, as measured along a direction perpendicular to the axial direction, may be is larger than the aerial gap G.

With this configuration, surface discharge is less likely to occur along a path from the side surface of the center electrode to the inner wall surface of the cavity along a direction perpendicular to the axial direction, so that it is possible to allow aerial discharge to occur in a stable manner.

(9) In the above-described plasma jet plug, the inner surface of the orifice electrode around a through hole of the orifice electrode may be covered with an insulating material so as to leave an exposed surface adjacent to the through hole, and a distance J between an outermost circumferential position of the exposed surface and the side surface of the center electrode, as measured along a direction perpendicular to the axial direction, may be smaller than the distance H.

With this configuration, the inner surface of the orifice electrode is covered with the insulating material so as to leave an exposed surface adjacent to the through hole, so that it is possible to suppress the erosion of the inner surface of the orifice electrode caused by plasma.

(10) In the above-described plasma jet plug, a distance K between the outermost circumferential position of the exposed surface and the front end of the center electrode may be larger than the aerial gap G.

With this configuration, surface discharge is less likely to occur along a path from the front end of the center electrode to the insulating material covering the inner surface around the through hole of the orifice electrode, so that it is possible to allow aerial discharge to occur in a stable manner.

(11) According to a second mode of the present invention, a plasma jet plug is provided. The plasma jet plug includes a tubular insulator having an axial hole extending along an axial direction; a center electrode disposed inside the axial hole; a metal shell disposed on an outer circumference of the insulator; and an orifice electrode electrically connected to the metal shell and disposed on a front side of the insulator, a plasma generating cavity being formed by a surface of the center electrode, an inner surface of the insulator, and an inner surface of the orifice electrode. In the plasma jet plug according to the second mode, a relationship between the aerial gap G that is the shortest distance between the center electrode and the orifice electrode and the shortest distance Dr between a front end edge of the center electrode and the inner surface of the insulator satisfies $1.5 \times G \leq Dr$. The feature portions of the plasma jet plug according to the second mode can be used in combination with the plasma jet plug according to the first mode described above, or may be used regardless of the presence of the feature portions of the plasma jet plug according to the first mode.

With the plasma jet plug according to the second mode, the shortest distance Dr between the front end edge of the center electrode and the inner surface of the insulator is sufficiently larger than the aerial gap G. Accordingly, surface discharge is less likely to occur, and aerial discharge is allowed to occur in a stable manner, thus making it possible to suppress the occurrence of channeling.

(12) In the above-described plasma jet plug, the inner surface of the insulator that faces the cavity may include a reduced diameter portion provided such that the inner surface of the insulator is reduced in diameter toward a rear side of the insulator, and the cavity may include a first cavity portion located on a front side relative to a rear end of the reduced diameter portion of the insulator, and a second cavity portion located on a rear side relative to the rear end of the reduced diameter portion.

With this configuration, the shortest distance Dr between the front end edge of the center electrode and the inner surface of the insulator can be increased by the second cavity portion having a small capacity, so that it is possible to keep the overall capacity of the cavity small while suppressing the occurrence of surface discharge, thus facilitating ejection of plasma.

(13) In the above-described plasma jet plug, a radial spatial distance Dp may be 0.1 mm or more, the radial spatial distance Dp being a distance between the surface of the center electrode and the inner surface of the insulator in the second cavity portion, as measured in a radial direction perpendicular to the axial direction.

With this configuration, it is possible to suppress the occurrence of surface discharge in the second cavity portion so as to allow aerial discharge to occur in a stable manner, thus suppressing the occurrence of channeling.

(14) In the above-described plasma jet plug, a depth Dq of the second cavity portion, as measured along the axial direction, may satisfy $0 < Dq \leq 3 \times Dp$.

With this configuration, by setting the depth Dq of the second cavity portion within this range, it is possible to increase the tendency that aerial discharge is more likely to occur than surface discharge, and also to prevent the capacity of the second cavity portion from being excessively increased, thus facilitating ejection of plasma.

(15) In the above-described plasma jet plug, a relationship between the radial spatial distance Dp of the second cavity portion and the shortest distance Dr between the front end edge of the center electrode and the inner surface of the insulator may satisfy $Dp/Dr \leq 0.5$.

With this configuration, by setting Dp/Dr within this range, it is possible to further facilitate ejection of plasma.

The present invention can be embodied in various forms. For example, the invention may be embodied in forms such as a plasma jet plug, an ignition device using a plasma jet plug, an internal combustion engine having the plasma jet plug mounted therein, an internal combustion engine having mounted therein an ignition device using the plasma jet plug, and the like.

BRIEF DESCRIPTION OF THE DRAWINGS

[FIG. 1] Partial cross-sectional view of a plasma jet plug according to an embodiment.

[FIG. 2] Enlarged cross-sectional view of a front end portion of the plasma jet plug.

[FIG. 3] Block diagram of an ignition device.

[FIG. 4] Enlarged views, in cross section, of front end portions of plasma jet plugs according to the first embodiment and a modified embodiment thereof.

[FIG. 5] Enlarged view, in cross section, of a front end portion of a plasma jet plug according to a second embodiment.

[FIG. 6] Enlarged view, in cross section, of a front end portion of a plasma jet plug according to a third embodiment.

[FIG. 7] Enlarged view, in cross section, of a front end portion of a plasma jet plug according to a fourth embodiment.

[FIG. 8] Enlarged view, in cross section, of a front end portion of a plasma jet plug according to a fifth embodiment.

[FIG. 9] Enlarged view, in cross section, of a front end portion of a plasma jet plug according to a sixth embodiment.

[FIG. 10] Explanatory diagrams showing test results for D1/G.

[FIG. 11] Explanatory diagrams showing test results for the groove width.

[FIG. 12] Explanatory diagrams showing test results for a relationship between the groove depth and the groove width.

[FIG. 13] Explanatory diagrams showing test results for the surface area of a side surface of a center electrode that faces a cavity.

[FIG. 14] Enlarged view, in cross section, of a front end portion of a plasma jet plug according to a seventh embodiment.

[FIG. 15] Enlarged view, in cross section, of a front end portion of a plasma jet plug according to an eighth embodiment.

[FIG. 16] Enlarged view, in cross section, of a front end portion of a plasma jet plug according to a ninth embodiment.

[FIG. 17] Enlarged view, in cross section, of a front end portion of a plasma jet plug according to a tenth embodiment.

[FIG. 18] Explanatory diagrams showing test results for the exposed length of a center electrode.

[FIG. 19] Explanatory diagrams showing test results for covering of an inner surface of an orifice electrode by an insulator.

[FIG. 20] Enlarged cross-sectional view of a front end portion of a plasma jet plug according to an eleventh embodiment.

[FIG. 21] Enlarged view, in cross section, of a front end portion of a plasma jet plug according to an eleventh embodiment.

[FIG. 22] Enlarged view, in cross section, of a front end portion of a plasma jet plug according to a twelfth embodiment.

[FIG. 23] Explanatory diagrams showing test results for Dr/G.

[FIG. 24] Explanatory diagrams showing test results for a radial spatial distance Dp of a second cavity portion.

[FIG. 25] Explanatory diagrams showing test results (No. 1) for Dq/Dp.

[FIG. 26] Explanatory diagrams showing test results (No. 2) for Dq/Dp.

[FIG. 27] Explanatory diagrams showing test results for Dp/Dr.

MODES FOR CARRYING OUT THE INVENTION

A. Overall configuration:

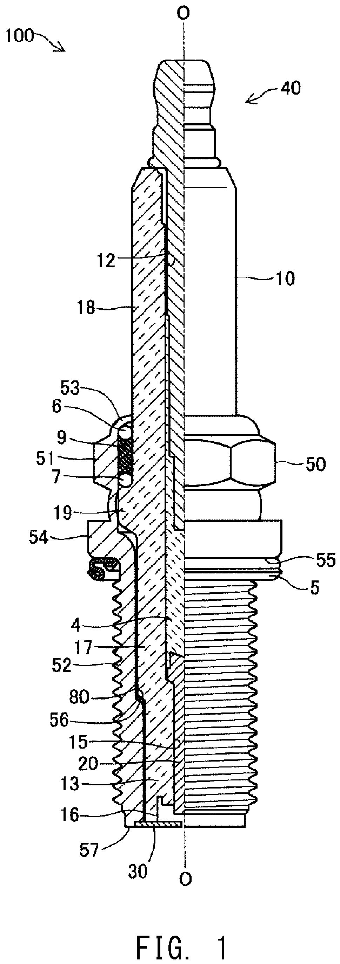

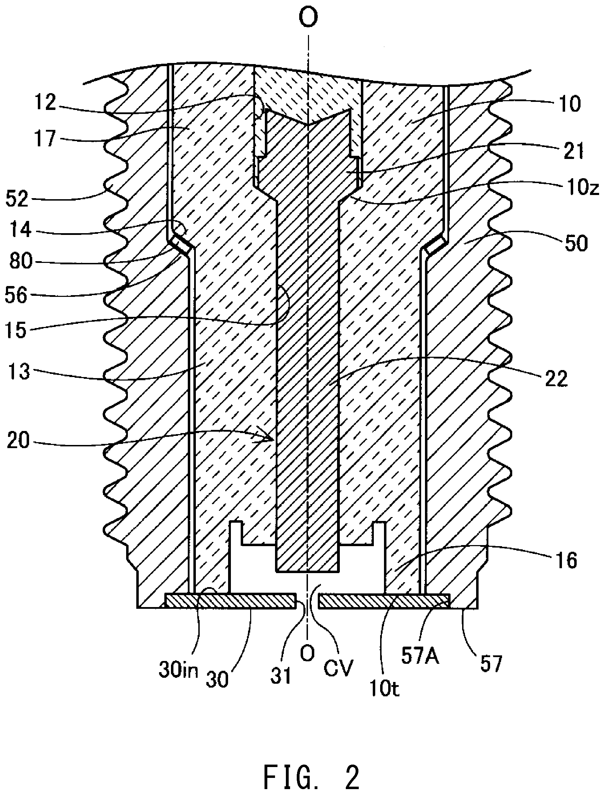

FIG. 1 is a partial cross-sectional view of a plasma jet plug 100 according to an embodiment of the present invention. FIG. 2 is an enlarged cross-sectional view of a front end portion of the plasma jet plug 100. In FIGS. 1 and 2, the lower side along a direction of an axial line O of the plasma jet plug 100 is referred to as a front side of the plasma jet plug 100, and the upper side is referred to as a rear side. In addition, a direction intersecting the axial line O and extending perpendicular to the axial line O is referred to as "radial direction".

In FIG. 1, the right side of the axial line O shows an external view of the plasma jet plug 100, and the left side of the axial line O shows a cross-sectional view. The plasma jet plug 100 includes an insulator 10, a metal shell 50 that holds the insulator 10, a center electrode 20 held inside the insulator 10, an orifice electrode 30 disposed at a front end portion 57 of the metal shell 50, and a metal terminal 40 disposed at a rear end portion of the insulator 10.

The insulator 10 is a tubular insulating member formed by baking a ceramic material such as alumina, and has an axial hole 12 extending in the direction of the axial line O. A flange portion 19 having the largest outer diameter is formed at substantially the center in the direction of the axial line O, and a rear trunk portion 18 is formed on the rear side thereof. A front trunk portion 17 having a smaller outer diameter than the rear trunk portion 18 is formed on the front side relative to the flange portion 19, and a long nose portion 13 having an even smaller outer diameter than the front trunk portion 17 is formed on the front side relative to the front trunk portion 17. A portion between the long nose portion 13 and the front trunk portion 17 is formed in a stepped shape. A portion of the axial hole 12 that corresponds to an inner circumference of the long nose portion 13 is formed as an electrode housing portion 15. The electrode housing portion 15 is made smaller in diameter than the inner circumferential portion of each of the front trunk portion 17, the flange portion 19, and the rear trunk portion 18. The center electrode 20 is held inside the electrode housing portion 15. An enlarged inner diameter portion 16 having a larger inner diameter than the long nose portion 13 is formed on the front side of the long nose portion 13 of the insulator 10.

The center electrode 20 is a bar-shaped conductive member extending along the axial line O, and is disposed inside the axial hole 12 of the insulator 10. In the present embodiment, the center electrode 20 is an integrally molded article formed from a high melting point material such as tungsten. However, various other configurations may be used as the configuration of the center electrode 20. For example, it is possible to use a configuration having a double structure composed of a base material and a core material embedded in the base material.

As shown in FIG. 2, the center electrode 20 includes a head portion 21 on the rearmost side, and a nose portion 22 having a smaller outer diameter than the head portion 21 and located on the front side relative to the head portion 21. The nose portion 22 of the center electrode 20 is housed in the electrode housing portion 15, and the head portion 21 of the center electrode 20 is housed in a portion on the rear side from a reduced inner diameter portion 10z of the axial hole 12. The front side surface of the head portion 21 and the rear side surface of the reduced inner diameter portion 10z are closely attached to each other, and are sealed around the entire circumference in the circumferential direction thereof.

As shown in FIG. 1, the center electrode 20 is electrically connected to the metal terminal 40 on the rear side via a conductive seal member 4 that is made of a mixture of a metal and glass and provided inside the axial hole 12. The seal member 4 causes the center electrode 20 and the metal terminal 40 to be fixed inside the axial hole 12 and to be electrically connected to each other. A high-voltage cable (not shown) is connected to the metal terminal 40 via a plug cap (not shown).

The metal shell 50 is a cylindrical metal member for fixing the plasma jet plug 100 to an engine head of an internal combustion engine, and holds the insulator 10 so as to surround the insulator 10. The metal shell 50 includes a tool engagement portion 51 to which a plug wrench is fitted, and a thread portion 52 that is screwed to the engine head. A crimp portion 53 is provided on the rear side relative to the tool engagement portion 51 of the metal shell 50. Circular ring members 6 and 7 are interposed between a portion of the metal shell 50 that extends from the tool engagement portion 51 to the crimp portion 53 and the rear trunk portion 18 of the insulator 10, and the space between the two ring members 6 and 7 is filled with powder of talc 9. Then, by crimping the crimp portion 53, the insulator 10 is pressed inside the metal shell 50 toward the front side via the ring members 6 and 7 and the talc 9. Thus, the stepped portion between the long nose portion 13 and the front trunk portion 17 of the insulator 10 is supported via an annular packing 80 by a locking portion 56 formed in a stepped shape on the inner circumferential surface of the metal shell 50, and the metal shell 50 and the insulator 10 are integrated with each other. The packing 80 maintains the airtightness between the metal shell 50 and the insulator 10, preventing the outflow of the combustion gas. In addition, a flange portion 54 is formed between the tool engagement portion 51 and the thread portion 52, and a gasket 5 is inserted in the vicinity of the rear side of the thread portion 52, or in other words, at a seating portion 55 of the flange portion 54.

The orifice electrode 30 is provided at the front end portion 57 of the metal shell 50. As shown in FIG. 2, a recess 57A is formed on the inner circumferential side of the front end portion 57 of the metal shell 50, and the orifice electrode 30 is fitted into the recess 57A. The orifice electrode 30 is a circular plate-shaped member having a through hole 31 at the center thereof. The through hole 31 functions as an ejection hole for ejecting plasma. The circumferential edge of the orifice electrode 30 is joined by laser welding or the like to the metal shell 50 around the entire circumference thereof. The metal shell 50 and the orifice electrode 30 are electrically connected. Since the metal shell 50 is screwed to the engine head and is grounded, the orifice electrode 30 is also grounded. In addition, the orifice electrode 30 covers an opening, in the front direction, of the metal shell 50.

As shown in FIG. 2, the cavity CV for generating plasma is formed between the inner surface of the front end portion of the insulator 10, the surface of the front end portion of the center electrode 20, and the inner surface of the orifice electrode 30. Plasma is generated by applying a voltage between the center electrode 20 and the orifice electrode 30.

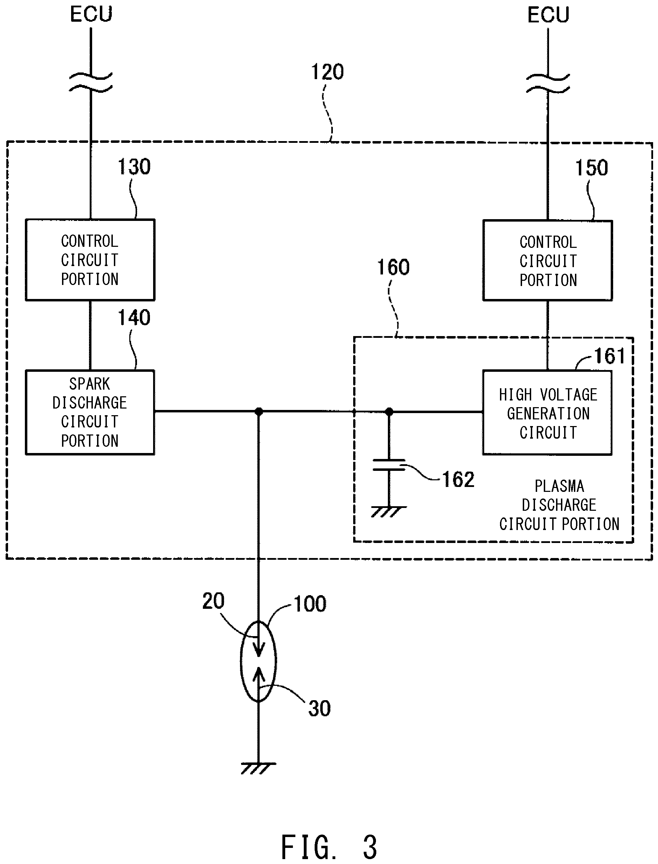

FIG. 3 is a block diagram showing a configuration of an ignition device 120 that ignites the plasma jet plug 100. The ignition device 120 includes a spark discharge circuit portion 140, a plasma discharge circuit portion 160, and two control circuit portions 130 and 150 that control the spark discharge circuit portion 140 and the plasma discharge circuit portion 160. The control circuit portions 130 and 150 are connected to an ECU of an automobile.

The spark discharge circuit portion 140 is a power circuit for performing the so-called triggered discharge in which dielectric breakdown is caused by applying a high voltage to a gap between the center electrode 20 and the orifice electrode 30 of the plasma jet plug 100, thereby starting spark discharge. The plasma discharge circuit portion 160 is a power circuit for supplying a large current to the gap in which dielectric breakdown is caused by the triggered discharge. The plasma discharge circuit portion 160 includes a condenser 162 in which electric energy is stored, and a high voltage generation circuit 161 for charging the condenser 162. One end of the condenser 162 is grounded, and the other end thereof is connected to the center electrode 20. When discharge occurs in the gap between the center electrode 20 and the orifice electrode 30, the gas inside the cavity CV is excited by the large current supplied from the ignition device 120, thus forming plasma. When the pressure inside the cavity CV is increased as a result of the expansion of the plasma that has been formed in the cavity CV, the plasma in the cavity CV is ejected from the through hole 31 of the orifice electrode 30. The ejected plasma ignites an air-fuel mixture in a combustion chamber of the internal combustion engine.

B. Various embodiments of front end portion of plasma jet plug:

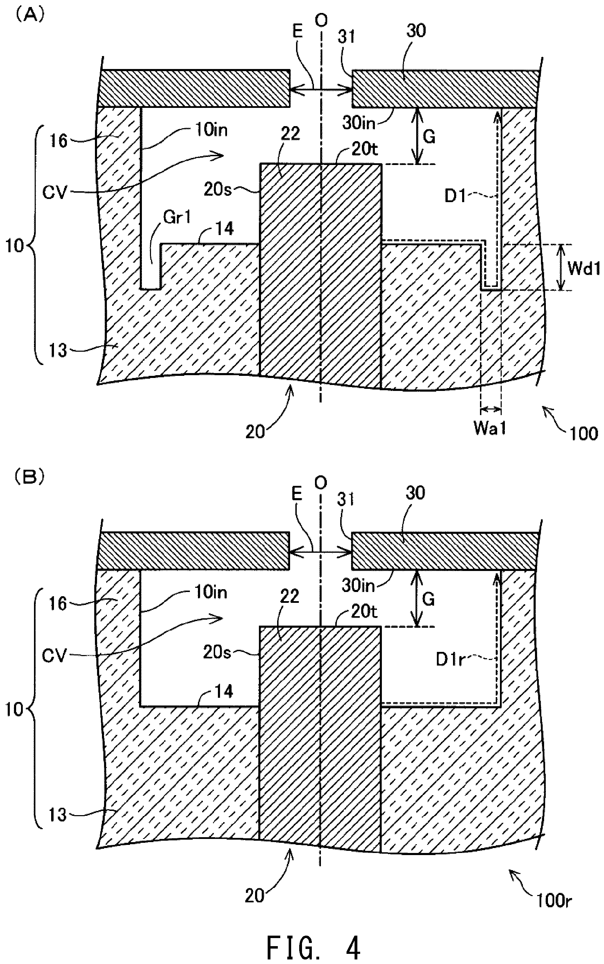

FIG. 4(A) is an enlarged view, in cross section, of a front end portion of a plasma jet plug according to the first embodiment, and FIG. 4(B) is an enlarged view, in cross section, of a front end portion of a modified embodiment thereof. Note that FIG. 4 is shown upside down relative to FIGS. 1 and 2. That is, the upper side of FIG. 4 corresponds to the front side of the plasma jet plug, and the lower side of FIG. 4 corresponds to the rear side of the plasma jet plug.

In the plasma jet plug 100 according to the first embodiment shown in FIG. 4(A), a front end portion of the center electrode 20 is formed as a columnar nose portion 22. At the long nose portion 13 in the vicinity of the front end of the insulator 10, the enlarged inner diameter portion 16 having a larger inner diameter than the long nose portion 13 is formed. Note that the long nose portion 13 is also referred to as "small inner diameter portion 13". A reduced diameter portion 14 is formed between the long nose portion 13 and the enlarged inner diameter portion 16. In this example, the reduced diameter portion 14 is formed as a surface perpendicular to the axial line O, but the reduced diameter portion 14 may be tapered. A circular groove portion Gr1 that is recessed toward the rear side relative to the surface of the reduced diameter portion 14 is formed at an outer edge of the reduced diameter portion 14 of the insulator 10. The groove portion Gr1 forms a recessed path on the surface path. The size of the groove portion Gr1 is defined by a width Wa1 and a depth Wd1 of the groove portion Gr1. The effect achieved by forming the groove portion Gr1 will be described later.

The cavity CV is a space surrounded by a surface 20s of the center electrode 20, an inner surface lOin of the insulator 10, and an inner surface 30in of the orifice electrode 30. However, the cavity CV does not include a portion constituted by the through hole 31 of the orifice electrode 30, and means a space inside the inner surface 30in of the orifice electrode 30, assuming that the through hole 31 is not provided. Between the outer circumferential surface of the nose portion 22 of the center electrode 20 and the inner surface of the insulator 10, a minute clearance (less than 0.06 mm) is formed for assembly of the two components. A space with a clearance of less than 0.06 mm is a minute space in which no plasma will be generated, and therefore does not function as a part of the cavity CV. As used herein, "cavity" means a space in which plasma can be generated, and also means a space having a clearance of 0.06 mm or more. To be more specific, the "cavity" in the first embodiment shown in FIG. 4(A) means a space that can be formed between the inner surface 10 in of the front end portion of the insulator 10, the surface of the front end portion of the center electrode 20, and the inner surface 30in of the orifice electrode 30 and has a clearance of 0.06 mm or more, and the "cavity" does not include a space having a clearance of less than 0.06 mm.

In FIG. 4(A), the following dimensions are further given.

(1) D1: the shortest length (hereinafter referred to as "shortest surface path length") of a surface path from the surface 20s of the center electrode 20 via the inner surface of the insulator 10 to the inner surface 30in of the orifice electrode 30. In FIG. 4(A), the shortest surface path length D1 includes the length of the recessed path along the groove portion Gr1.
(2) E: the inner diameter of the through hole 31 of the orifice electrode 30.
(3) G: a distance G, in the axial direction, between the inner surface 30in of the orifice electrode 30 and a front end surface 20t of the center electrode 20. The distance G is also referred as "aerial gap G". A typical range of values of the aerial gap G is, for example, 0.3 mm to 1.5 mm.

Note that the inner diameter E of the through hole 31 of the orifice electrode 30 is preferably smaller than the outer diameter of the nose portion 22 located at the front end of the center electrode 20. This is to facilitate aerial discharge in the aerial gap G.

FIG. 4(B) is an enlarged view, in cross section, of a front end portion of a plasma jet plug 100r according to a modified embodiment. The plasma jet plug 100r corresponds to the plasma jet plug 100 of the first embodiment from which the groove portion Gr1 of the insulator 10 has been omitted, and the rest of the configuration is the same as that of the first embodiment. The shortest surface path length D1r in this modified embodiment is shorter than the shortest surface path length D1 in the first embodiment by the length (= Wa1 + 2 × Wd1) of the groove portion Gr1.

In the first embodiment shown in FIG. 4(A), the groove portion Gr1 is provided in a portion of the inner surface lOin of the insulator 10, so that the shortest surface path length D1 can be longer than that in the modified embodiment. As a result, it is possible to reduce the likelihood of occurrence of surface discharge so as to allow aerial discharge to occur in a stable manner. In this respect, it is particularly preferable that the shortest surface path length D1 is greater than or equal to 5 times the aerial gap G. However, when the shortest surface path length D1r is set to be greater than or equal to 5 times the aerial gap G in the modified embodiment shown in FIG. 4(B), the modified embodiment can also make it possible to reduce the likelihood of occurrence of surface discharge so as to allow aerial discharge to occur in a stable manner, and therefore can be used as an embodiment of the present invention. However, it is preferable to provide a groove portion Gr1 that forms a recessed path on the surface path as in the first embodiment shown in FIG. 4(A), since the shortest surface path length D1 can be increased without excessively increasing the capacity of the cavity CV.

The groove width Wa1 of the groove portion Gr1 may be 0.06 mm or more, but is preferably 0.1 mm or more. The reason is that, when the groove width Wa1 is excessively small, the groove portion Gr1 may not have a function of extending the surface path (i.e., discharge occurs so as to jump over the groove portion Gr1). It is preferable to provide a groove portion Gr1 having a groove width Wa1 of 0.1 mm or more, since the shortest surface path length D1 can be increased while keeping the capacity of the cavity small. Although the maximum value of the groove width Wa1 is not particularly limited, the groove width Wa1 is, for example, preferably 0.5 mm or less, more preferably 0.3 mm or less.

The depth Wd1 of the groove portion Gr1 is preferably less than or equal to 3 times the groove width Wa1. This makes it possible to keep the capacity of the cavity CV small, while increasing the shortest surface path length D1, thereby facilitating ejection of plasma.

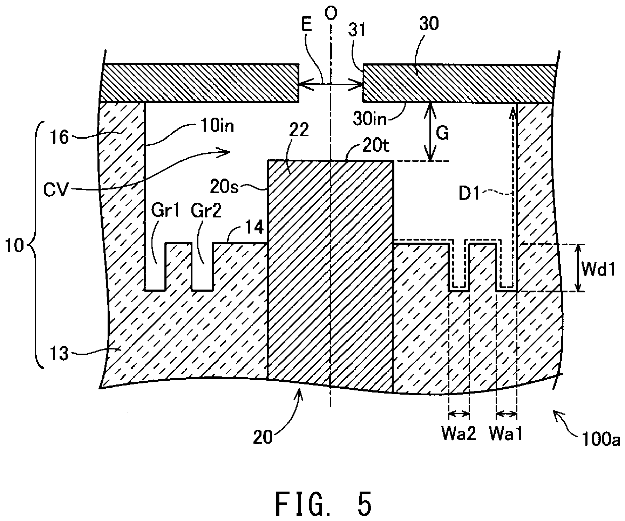

FIG. 5 is an enlarged view, in cross section, of a front end portion of a plasma jet plug 100a according to a second embodiment. The plasma jet plug 100a corresponds to the plasma jet plug 100 (FIG. 4(A)) of the first embodiment to which a circular second groove portion Gr2 has been additionally provided in the inner surface lOin of the insulator 10, and the rest of the configuration is the same as that of the first embodiment. That is, in the plasma jet plug 100a according to the second embodiment, two groove portions Gr1 and Gr2 are provided in the inner surface lOin of the insulator 10. Although the groove depth Wd1 of the second groove portion Gr2 is the same as the groove depth of the first groove portion Gr1 in the example shown in FIG. 5, their depths may be changed. The groove width Wa2 of the second groove portion Gr2 may be either the same as or different from the groove width Wa1 of the first groove portion Gr1. Furthermore, three or more groove portions may be provided. Although the groove portions Gr1 and Gr2 are provided at the reduced diameter portion 14 of the insulator 10 in the example shown in FIG. 5, the groove portions may be formed in a cylindrical inner surface of the insulator 10 that extends along the axial line O.

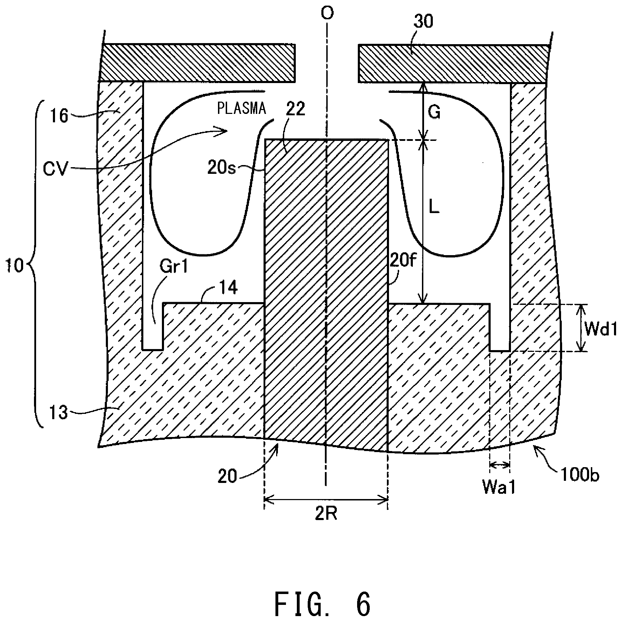

FIG. 6 is an enlarged view, in cross section, of a front end portion of a plasma jet plug 100b according to a third embodiment. The plasma jet plug 100b has a configuration in which the portion of the cavity CV of the plasma jet plug 100 (FIG. 4(A)) according to the first embodiment has been extended in the direction of the axial line O, and the rest of the configuration is the same as that of the first embodiment. That is, in the plasma jet plug 100b of the second embodiment, a side surface 20f of the center electrode 20 that faces the cavity CV is longer than that in the first embodiment. The surface area $S_{20f}$ of the side surface 20f of the center electrode 20 can be expressed as follows:

$$S_{20f} = 2\pi R \cdot L \quad \ldots(1),$$

where R represents the radius of the exposed portion of the center electrode 20, and L represents the length, in the axial direction, of the exposed portion of the center electrode 20. A typical range of values of the radius R is, for example, 0.25 mm to 1 mm. A typical range of values of the length L is, for example, 0 mm to 5 mm.

When the surface area $S_{20f}$ of the side surface 20f of the center electrode 20 is excessively increased, plasma is cooled by the center electrode 20, which may result in deterioration in the plasma ejection performance. In view of this, the surface area $S_{20f}$ of the side surface 20f of the center electrode 20 is preferably 20 mm$^2$ or less. This can suppress a phenomenon in which plasma is cooled by the center electrode 20, making it possible to facilitate ejection of plasma.

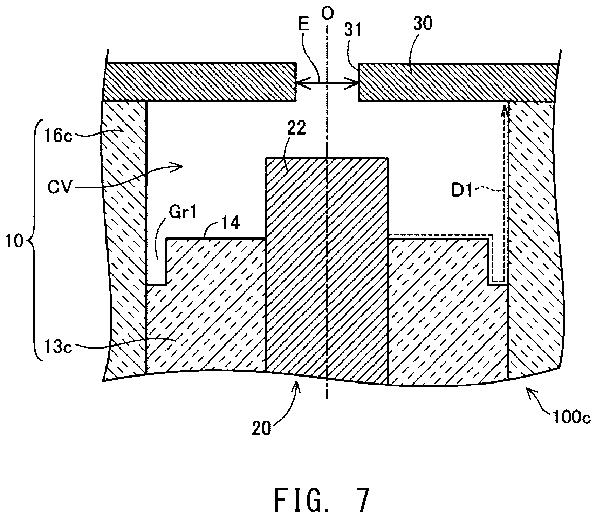

FIG. 7 is an enlarged view, in cross section, of a front end portion of a plasma jet plug 100c according to a fourth embodiment. In the plasma jet plug 100c, a portion of the insulator 10 that faces the cavity CV is formed of a plurality of members 13c and 16c, and the rest of the configuration is the same as that of the first embodiment. More specifically, the portion constituted by the long nose portion 13 of the insulator 10 and the enlarged inner diameter portion 16 that is continuous with the front side thereof is divided into two members, namely, a first member 13c provided on the outer circumferential side of the center electrode 20 and a second member 16c provided on the outer circumferential side thereof. The first member 13c corresponds to the long nose portion 13 shown in FIG. 4(A), and is formed so as to have a smaller outer diameter than the long nose portion 13. The second member 16c is a substantially circular member, and is fixed by being fitted to the outer circumferential side of the first member 13c.

In FIG. 7, a groove portion Gr1 that forms a recessed path on the surface path is formed at a position at which the first member 13c is in contact with the second member 16c. The groove portion Gr1 is formed at a boundary portion between the two members 13c and 16c. Forming a portion of the insulator 10 that faces the cavity CV by using the plurality of members 13c and 16c offers an advantage that the groove portion Gr1 can be more easily formed. However, the cavity CV may be formed in the same shape as that shown in FIG. 4(B) by omitting the groove portion Gr1.

An additional advantage can be achieved by forming a portion of the insulator 10 that faces the cavity CV by using the plurality of members 13c and 16c and also changing the materials of these members. For example, the first member 13c on the inner circumferential side may be formed from a first insulating material (e.g., aluminum nitride (AlN)) having a higher coefficient of thermal conductivity than the second member 16c on the outer circumferential side, and the second member 16c on the outer circumferential side may be formed from a second insulating material (e.g., alumina ($Al_2O_3$)) having a higher dielectric strength than the first member 13c on the inner circumferential side. By using such a configuration, it is possible to increase the heat conduction from the center electrode 20 by the first member 13c, making it possible to enhance the durability of the center electrode 20. Since the dielectric strength of the second member 16c is higher than that of the first member 13c, it is possible to enhance the voltage endurance of the insulator 10 as a whole.

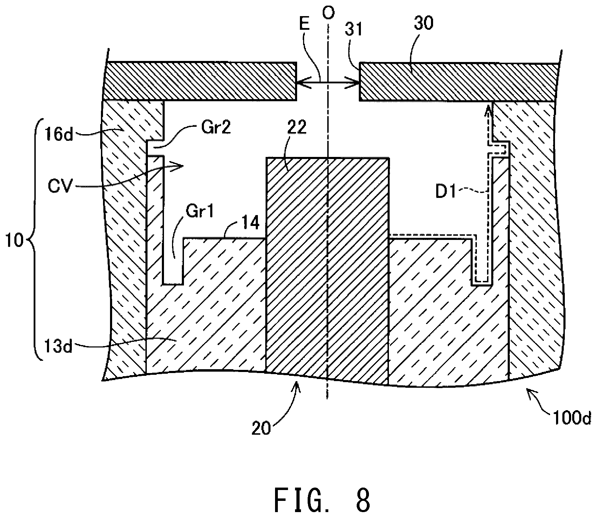

FIG. 8 is an enlarged view, in cross section, of a front end portion of a plasma jet plug 100d according to a fifth embodiment. In the plasma jet plug 100d, a portion of the insulator 10 that faces the cavity CV is formed of a plurality of members 13d and 16d, similarly to the fourth embodiment (FIG. 7). In FIG. 8, a first groove portion Gr1 is provided in the first member 13d of the insulator 10, and a second groove portion Gr2 is provided at a boundary position between the first member 13d and the second member 16d. In other words, a portion of the wall surface of the second groove portion Gr2 is constituted by a surface of the first member 13d, and the other portions are constituted by a surface of the second member 16d. As a result, the shortest surface path length D1 can be sufficiently increased with the plurality of groove portions Gr1 and Gr2.

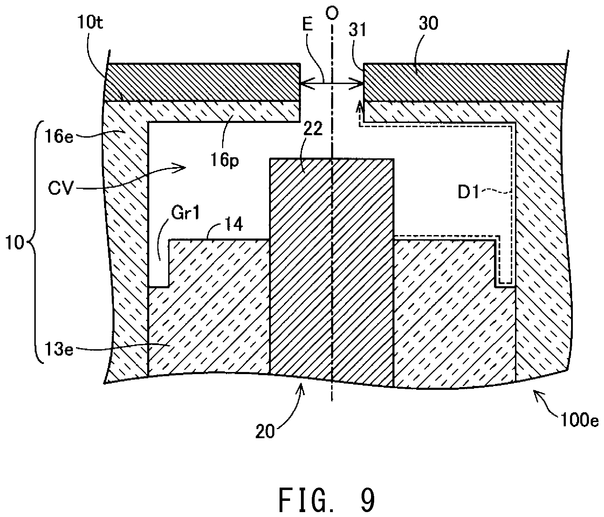

FIG. 9 is an enlarged view, in cross section, of a front end portion of a plasma jet plug 100e according to a sixth embodiment. In the plasma jet plug 100e, a portion of the insulator 10 that faces the cavity CV is formed of a plurality of members 13e and 16e, similarly to the fourth embodiment (FIG. 7) and the fifth embodiment (FIG. 8). FIG. 9 is different from FIG. 7 in that a front end opening portion 16p having a small opening is provided at a front end of the second member 16d so as to cover the inner surface 30in of the orifice electrode 30. Note that the front end opening portion 16p of the second member 16d may cover the inner surface 30in of the orifice electrode 30 either entirely or partially. By providing the front end opening portion 16p with the second member 16d so as to cover the inner surface 30in of the orifice electrode 30 in this manner, it is possible to further increase the shortest surface path length D1.

As can be understood from the above-described embodiments shown in FIGS. 4 to 9, the shortest surface path length D1 can be sufficiently increased by providing at least one groove portion in the inner surface of the insulator 10 in a portion located on the shortest surface path from the surface 20s of the center electrode 20 via the inner surface of the insulator 10 to the inner surface 30in of the orifice electrode 30. As a result, it is possible to reduce the likelihood of occurrence of surface discharge so as to allow aerial discharge to occur in a stable manner. As can also be understood from the examples shown in FIGS. 7 to 9, forming a portion of the insulator 10 that faces the cavity CV by using a plurality of members offers an advantage that the inner surface shape of a portion of the insulator that faces the cavity can be easily formed so as to increase the shortest surface path length D1.

C. Test results:

In the following, test results for preferable dimensions of the plasma jet plugs shown in FIGS. 4 to 9 will be described sequentially.

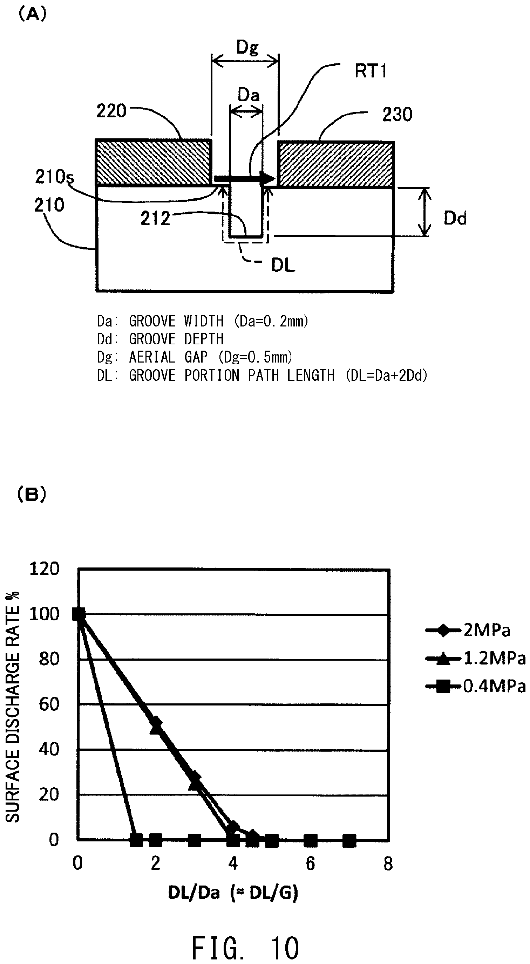

FIG. 10 shows explanatory diagrams showing test results for a ratio D1/G between the shortest surface path length D1 and the aerial gap G. FIG. 10(A) is a schematic plan view of a testing apparatus. In this test, an insulator 210 having a groove portion 212 was placed in a pressure chamber, and a first electrode 220 and a second electrode 230 were placed on the insulator 210 so as to oppose each other with the groove portion 212 interposed therebetween. The insulator 210 was formed from alumina. A gap Dg between the two electrodes 220 and 230 was set to a fixed value of 0.5 mm. A groove width Da of the groove portion 212 was set to a fixed value of 0.2 mm, and the groove portion path length DL was varied by changing the groove depth Dd of the groove portion 212. The "groove portion path length DL" is the shortest path length that follows the inner surface of the groove portion 212, and is given by $DL = Da + 2Dd$.

The two electrodes 220 and 230 simulate the center electrode 20 and the orifice electrode 30. As a discharge path between the two electrodes 220 and 230, the following two discharge paths may be produced.

    (1) First discharge path RT1: a discharge path (indicated by the solid arrow in FIG. 10(A)) that jumps over the groove portion 212 in the vicinity of an upper surface 210s of the insulator 210.

    (2) Second discharge path: a surface path (not shown) that follows the upper surface 210s of the insulator 210 and the groove portion path length DL.

Since these two discharge paths are the same in the configuration of the path portion along the upper surface 210s of the insulator 210, the only difference is that the first discharge path RT1 passes along an aerial path following the groove width Da, and the second discharge path passes along a recessed surface path following the groove portion path length DL. Therefore, by applying this structure to the structure shown in FIG. 4, it can be understood that the groove width Da serves as a dimension that simulates the aerial gap G shown in FIG. 4, and the groove portion path length DL serves as a dimension that simulates the shortest surface path length D1.

In the discharge path confirmation test shown in FIG. 10, discharge was performed 100 times for each case, with the interior of the pressure chamber being pressurized to 0.4 MPa, 1.2 MPa, and 2.0 MPa (all in atmosphere). Then, the discharge path was imaged by using a high-speed camera, and the percentage of times that discharge had occurred on the above-described second discharge path, out of 100 times of discharge, was determined, and the determined percentage was used as "surface discharge rate". Here, "surface discharge" means discharge along the above-described second discharge path, and "aerial discharge" means discharge along the first discharge path RT1.

FIG. 10(B) shows a relationship between the value of the ratio DL/Da and the surface discharge rate. According to the test results, the surface discharge rate decreased with an increase in the value of the ratio DL/Da. When DL/Da was 5 or more, no surface discharge occurred, and all the discharges were aerial discharges. The results can be understood as follows. That is, as the groove portion path length DL shown in FIG. 10(A) increases, the above-described surface discharge via the second discharge path is less likely to occur, and aerial discharge via the first discharge path RT1 is more likely to occur. Therefore, by setting DL/Da to 5 or more, it is possible to allow aerial discharge to occur in a stable manner. Meanwhile, as described previously, the groove portion path length DL simulates the shortest surface path length D1 shown in FIG. 4, and the groove width Da simulates the aerial gap G. Accordingly, the horizontal axis shown in FIG. 10(B) can be considered to simulate the ratio D1/G between the shortest surface path length D1 and the aerial gap G. In view of the test results, in the plasma jet plug, it is preferable that the value of the ratio D1/G between the shortest surface path length D1 and the aerial gap G is set to 5 or more. In other words, it is preferable that the shortest surface path length D1 is greater than or equal to 5 times the aerial gap G. This makes it possible to reduce the likelihood of occurrence of surface discharge in the cavity CV so as to allow aerial discharge to occur in a stable manner.

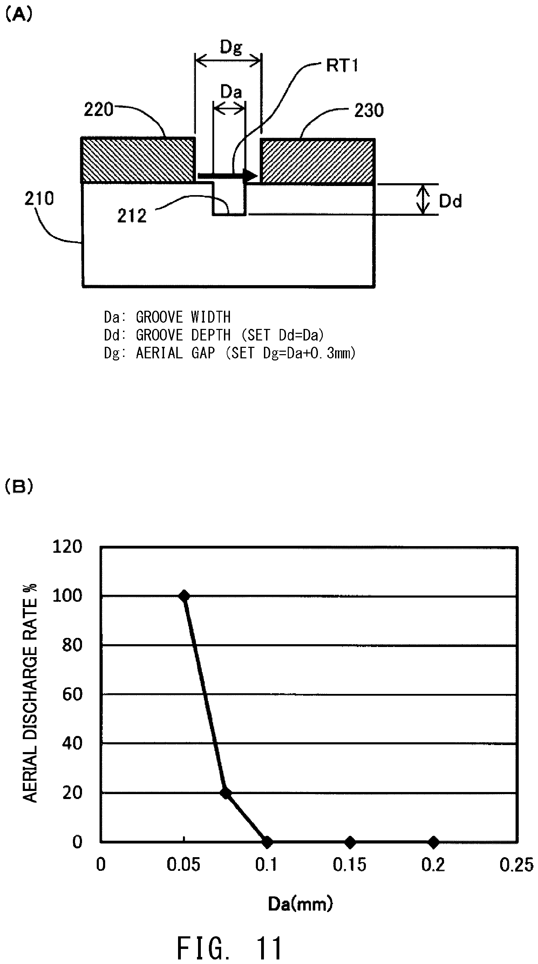

FIG. 11 shows explanatory diagrams showing test results for the groove width Wa1 of the groove portion Gr1. Although the testing apparatus shown in FIG. 11(A) is the same as that shown in FIG. 10(A), the dimensions are set differently from those in the test shown in FIG. 10. That is, in the test shown in FIG. 11, the groove width Da was changed to several values, and the groove depth Dd was also changed such that the groove depth Dd was equal to the groove width Da. In addition, the aerial gap Dg was set to a value obtained by adding 0.3 mm to each of the values of the groove width Da. In this test, the groove width Da simulates the groove width Wa1 of the groove portion Gr1 in FIG. 4. In the discharge path confirmation test, discharge was performed 100 times for each case, with the interior of the pressure chamber being pressurized to 0.8 MPa (in atmosphere), the percentage of times that discharge had occurred on the first discharge path RT1, out of 100 times of discharge, was determined, and the determined percentage was used as "aerial discharge rate".

FIG. 11(B) shows a relationship between the value of the groove width Da and the aerial discharge rate. According to the test results, the aerial discharge rate decreased with an increase in the value of the groove width Da. When the groove width Da became 0.1 mm or more, no aerial discharge occurred, and all the discharges were surface discharges. The results can be understood as follows. That is, when the groove width Da is small, aerial discharge is likely to occur along the first discharge path RT1, not via the recessed surface path (second discharge path) along the groove portion 212. On the other hand, as the groove width Da increases, surface discharge along the recessed surface path along the groove portion 212 is more likely to occur. In other words, when the groove width Da of the groove portion 212 is less than 0.1 mm, the recessed path along the groove portion 212 is less likely to serve the function of a discharge path. On the other hand, when the groove width Da becomes 0.1 mm or more, the recessed path along the groove portion 212 sufficiently serves the function of a discharge path. In view of the test results, in the plasma jet plug shown in FIG. 4, it is preferable that the groove width Wa1 of the groove portion Gr1 is set to 0.1 mm or more. The same applies to the groove widths of the other groove portions Gr2 (FIG. 5 and FIG. 8). When the groove width Wa1 is set to 0.1 mm or more, the surface path can be sufficiently increased with the groove portion Gr1. Accordingly, it is possible to sufficiently suppress the occurrence of surface discharge in the cavity CV so as to allow aerial discharge to occur in a stable manner.

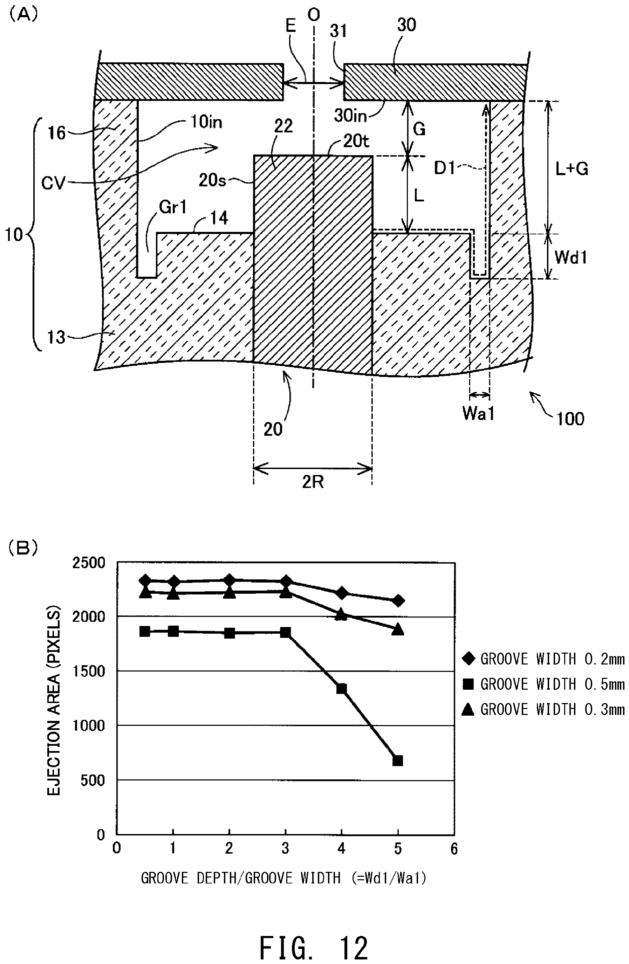

FIG. 12 shows explanatory diagrams showing test results for the groove depth Wd1 and the groove width Wa1 of the groove portion Gr1. In this test, a plurality of types of samples including groove portions Gr1 having different groove depths Wd1 and groove widths Wa1 were produced. For each of these samples, L + G (L is the length of the exposed portion of the center electrode 20, G is the aerial gap) was set to 3.5 mm, the outer diameter 2R of the center electrode 20 was set to 1.5 mm, and the inner diameter of the enlarged inner diameter portion 16 of the insulator 10 was set to 3.5 mm. The groove width Wa1 was set to three values, namely, 0.2 mm, 0.3 mm, and 0.5 mm, and the groove depth Wd1 was set such that the value of Wd1/Wa1 was in the range of 0.5 to 5.0. Then, each sample of the plasma jet plug was discharged, with the interior of the pressure chamber being pressurized to 0.6 MPa (in atmosphere), and plasma that had been ejected from the through hole 31 of the orifice electrode 30 was imaged from the side, to obtain a schlieren image. Then, the schlieren image was binarized so as to be classified into pixels representing a high density portion and pixels representing a low density portion, and the number of pixels representing a high density portion was calculated as the size of the ejected plasma. Note that the schlieren imaging was performed 10 times for each sample, and an average of the number of pixels of the plasma calculated by the 10 times of imaging was determined as the ejection area.

FIG. 12(B) shows a relationship between the value of the ratio Wd1/Wa1 between the groove depth Wd1 and the groove width Wa1 and the ejection area of plasma. According to the test results, when the value of Wd1/Wa1 became 3 or more, the ejection area of plasma was reduced with an increase of the value of Wd1/Wa1, regardless of the value of the groove width Wa1. The reason is presumably that when the groove depth Wd1 is excessively increased, the capacity of the cavity CV is excessively increased, making plasma less likely to be ejected. In view of the test results, it is preferable that the depth Wd1 of the groove portion Gr1 is less than or equal to 3 times the groove width Wa1. The same applies to the groove widths of the other groove portions Gr2. This makes it possible to keep the capacity of the cavity CV small, while increasing the shortest surface path length D1, thereby facilitating ejection of plasma.

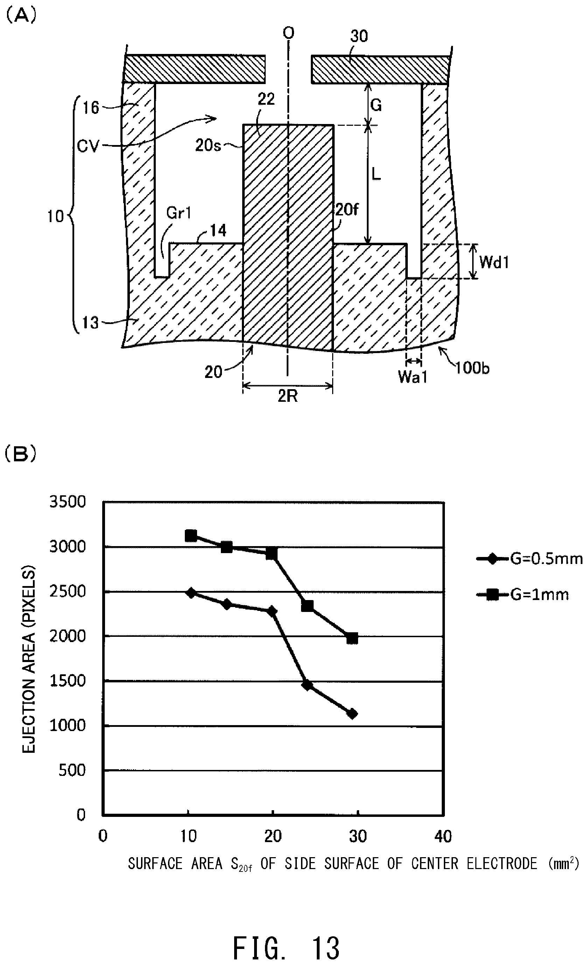

FIG. 13 shows results of a plasma ejection test for the surface area of the side surface of the center electrode that faces the cavity. In this test, as shown in FIG. 6, a plurality of types of samples having different surface areas $S_{20f}$ of the side surface 20f of the center electrode 20 that faces the cavity CV were produced by changing the length L of the center electrode 20 exposed in the cavity CV. For these samples, the aerial gap G was set to 0.5 mm or 1.0 mm, the outer diameter 2R of the center electrode 20 was set to a fixed value of 1 mm, the groove width Wa1 was set to a fixed value of 0.2 mm, and the groove depth Wd1 was set to a fixed value of 0.4 mm. Then, schlieren imaging was performed under the same conditions as those shown in FIG. 12, and an average of the number of pixels of plasma calculated by 10 times of imaging was determined as the ejection area.

FIG. 13(B) shows a relationship between the surface area $S_{20f}$ of the side surface 20f of the center electrode 20 that faces the cavity CV and the ejection area of plasma. As can be understood from the test results, the ejection area of plasma tends to decrease with an increase of the value of the surface area $S_{20f}$ of the side surface 20f of the center electrode 20. In view of the test results, it is preferable that the value of the surface area $S_{20f}$ of the side surface 20f of the center electrode 20 is small. However, even when the value of the surface area $S_{20f}$ becomes less than 20 mm$^2$, the ejection area of plasma will not increase very much. Accordingly, it is sufficient that the value of the surface area $S_{20f}$ is 20 mm$^2$ or less. Note that it is possible to adopt a shape in which the length L of the center electrode 20 that faces the cavity CV has a negative value (shape in which a portion of the nose portion 22 located at the front end of the center electrode 20 is recessed to the rear side relative to the reduced diameter portion 14 of the recessed insulator 10). However, such a shape may, on the contrary, make surface discharge more likely to occur. In view of this, it is preferable that the length L of the center electrode 20 that faces the cavity CV is 0 mm or more, or in other words, the surface area $S_{20f}$ of the side surface 20f of the center electrode 20 that faces the cavity CV is 0 mm$^2$ or more.

D. Other embodiments:

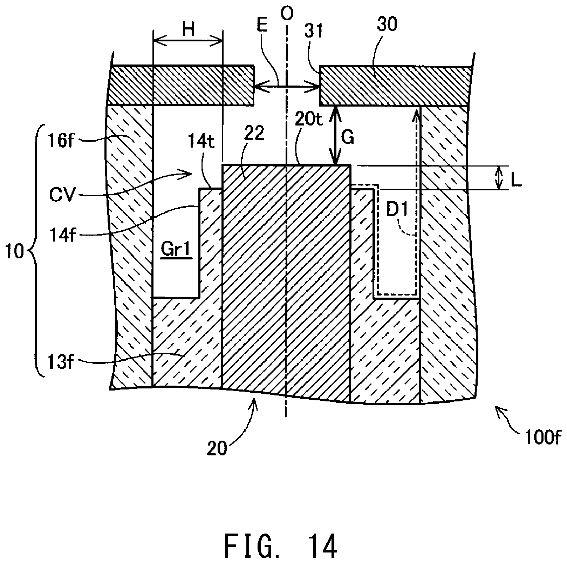

FIG. 14 is an enlarged view, in cross section, of a front end portion of a plasma jet plug 100f according to a seventh embodiment. The plasma jet plug 100f is the same as the fourth embodiment (FIG. 7) in that a portion of the insulator 10 that faces the cavity CV is formed of a plurality of members 13f and 16f, and is different from the fourth embodiment in the following two respects. The first difference is that a reduced diameter portion 14f of the insulator 10 extends so as to cover the side surface of the front end portion (nose portion 22) of the center electrode 20 in a state in which a part of the front end portion of the center electrode 20 is exposed. In this case, it is preferable that the distance L from a front end 14t of the reduced diameter portion 14f (insulating material) provided on the side surface of the center electrode 20 to the front end of the center electrode 20 is set to 0.4 mm or less. By doing so, the distance L (referred to as "exposed length L of the center electrode 20") becomes sufficiently short, so that it is possible to suppress the erosion of the center electrode caused by the heat of plasma. The second difference is that the distance H between the side surface of the center electrode 20 and the inner wall surface of the cavity CV, as measured along a direction perpendicular to the direction of the axial line O, is smaller than that in the fourth embodiment (FIG. 7). However, in this case as well, it is preferable that the distance H is larger than the aerial gap G. This can reduce the likelihood of occurrence of surface discharge in a direction perpendicular to the direction of the axial line O along a path from the side surface of the center electrode 20 to the inner wall surface of the cavity CV, so that it is possible to allow aerial discharge to occur in a stable manner. Here, it is preferable that the condition that G < H is satisfied by the other various embodiments.

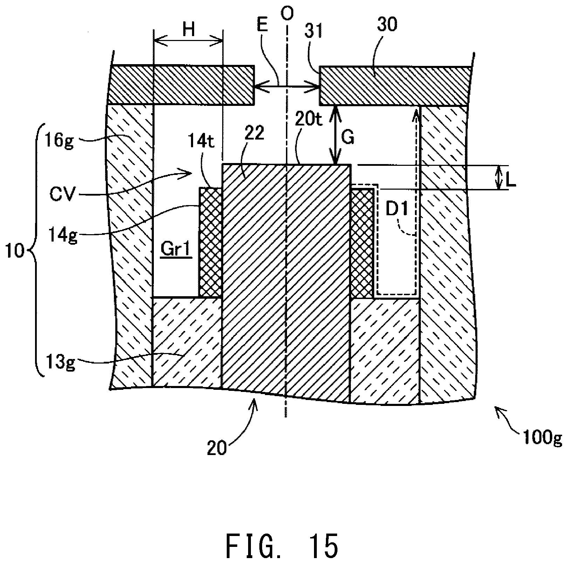

FIG. 15 is an enlarged view, in cross section, of a front end portion of a plasma jet plug 100g according to an eighth embodiment. The plasma jet plug 100g is different from the seventh embodiment (FIG. 14) in that an insulating member 14g different from the insulator 10, in place of the reduced diameter portion 14f of the insulator 10, covers the side surface of the front end portion (nose portion 22) of the center electrode 20, and the rest of the configuration is the same as that of the seventh embodiment. The insulating member 14g can be formed from any insulating material such as alumina. The insulating member 14g can be formed so as to cover around the center electrode 20 by any method such as plating.

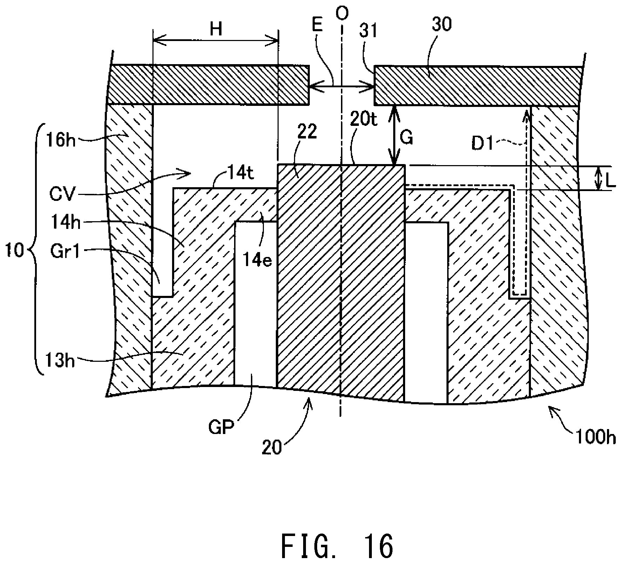

FIG. 16 is an enlarged view, in cross section, of a front end portion of a plasma jet plug 100h according to a ninth embodiment. The plasma jet plug 100h is different from the seventh embodiment (FIG. 14) in the following two respects. The first difference is that a reduced diameter portion 14h of the insulator 10 covers, at a front end portion 14e thereof, the front end portion of the center electrode 20, but a gap GP is formed on the lower side (rear side) of the front end portion 14e. However, the gap GP may be omitted. The second difference is that the distance H between the side surface of the center electrode 20 and the inner wall surface of the cavity CV, as measured along a direction perpendicular to the direction of the axial line O, is larger than that in the seventh embodiment (FIG. 14). However, the second difference is of low importance, and therefore may not be provided.

As can be understood from the above-described seventh to ninth embodiments, as the insulating material for covering the side surface of the center electrode 20 in the cavity CV, it is possible to use a part of the insulator 10, or to use an insulating material (e.g., the insulating member 14g shown in FIG. 15) different from the insulator 10. According to these embodiments, the exposed length L of the center electrode 20 is sufficiently short, and it is therefore possible to suppress the erosion of the center electrode caused by the heat of plasma.

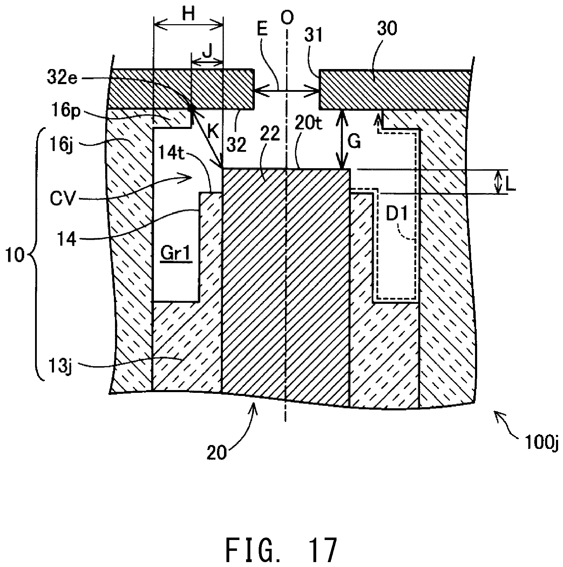

FIG. 17 is an enlarged view, in cross section, of a front end portion of a plasma jet plug 100j according to a tenth embodiment. The plasma jet plug 100j is different from the seventh embodiment (FIG. 14) in that, similarly to the sixth embodiment shown in FIG. 9, a front end opening portion 16p having a small opening is provided at the front end of a second member 16j of the insulator 10 so as to cover the inner surface of the orifice electrode 30. However, the opening of the front end opening portion 16p is larger than the through hole 31 of the orifice electrode 30, and an exposed surface 32 that is not covered with the front end opening portion 16p is left on the inner surface of the orifice electrode 30. The exposed surface 32 is located at a position adjacent to the through hole 31 of the orifice electrode 30. It is preferable that an outermost circumferential position 32e of the exposed surface 32 is located outward in a radial direction relative to an edge portion of the front end of the center electrode 20. Here, the "radial direction" means a direction perpendicular to the direction of the axial line O. In this case, it is preferable that a distance J between the outermost circumferential position 32e of the exposed surface 32 and the side surface of the center electrode 20, as measured along the radial direction, is smaller than the distance H between the side surface of the center electrode 20 and the inner wall surface of the cavity CV. This allows the inner surface of the orifice electrode 30 to be covered with the insulating material so as to leave the exposed surface 32 adjacent to the through hole 31, so that it is possible to suppress the erosion of the inner surface of the orifice electrode 30 caused by plasma.

The tenth embodiment also has an additional feature that a linear distance K between the outermost circumferential position 32e of the exposed surface 32 and the front end of the center electrode 20 is larger than the aerial gap G. If the condition G < K is satisfied, surface discharge is less likely to occur along a path from the front end of the center electrode 20 to the insulating material (front end opening portion 16p) covering around the inner surface of the through hole 31 of the orifice electrode 30, and it is thus possible to allow aerial discharge to occur in a stable manner. Although the front end opening portion 16p of the second member 16j that constitutes a part of the insulator 10 is used as the insulating material for covering the inner surface around the through hole 31 of the orifice electrode 30 in the tenth embodiment, it is possible to use an insulating material different from the insulator 10 instead.

Although the insulator 10 is formed of a plurality of members (e.g., the two members 13f and 16f in FIG. 14) in the seventh to tenth embodiments, it is possible to form the insulator 10 by a single member instead.

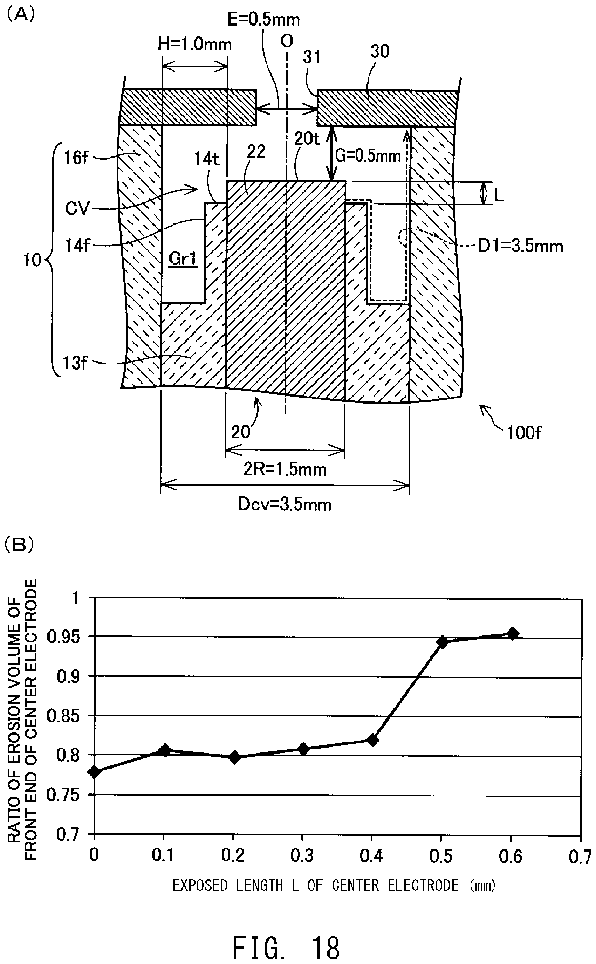

FIG. 18 shows explanatory diagrams showing test results for the exposed length L of the center electrode 20. FIG. 18(A) shows the shape of samples, and this shape corresponds to the shape of the seventh embodiment as shown in FIG. 14. In this test, the following parameters were used.

- The shortest surface path length D1: 3.5 mm
- The inner diameter E of the through hole 31 of the orifice electrode 30: 0.5 mm
- The aerial gap G: 0.5 mm
- The outer diameter 2R of the center electrode 20: 1.5 mm
- The inner diameter Dcv (inner diameter of the enlarged inner diameter portion 16f) of the cavity CV: 3.5 mm
- The distance H between the side surface of the center electrode 20 and the inner wall surface of the cavity CV: 1.0 mm

- The exposed length L of the center electrode 20 (with shielding by the insulating member 14f): 0 to 0.6 mm
- The exposed length L of the center electrode 20 (without shielding by the insulating member 14f): 2.0 mm

FIG. 18(B) is a graph showing test results for a relationship between the exposed length L of the center electrode 20 and the erosion volume of the front end of the center electrode 20. The vertical axis represents a ratio obtained by dividing the erosion volume of the front end of the center electrode 20 with shielding on the side surface of the center electrode 20 by the erosion volume thereof without shielding on the side surface of the center electrode 20. Here, "with shielding on the side surface of the center electrode 20" means that the side surface of the front end portion of the center electrode 20 is covered with the reduced diameter portion 14f of the insulator 10 (L = 0 to 0.6 mm). On the other hand, "without shielding on the side surface of the center electrode 20" means that the side surface of the front end portion of the center electrode 20 is not covered with the reduced diameter portion 14f of the insulator 10 (L = 2.0 mm). The "erosion volume" is a value obtained by determining a volume that has been lost from the front end portion of the center electrode 20 after performing a spark discharge durability test at 30 Hz for 30 hours.

As can be understood from the results shown in FIG. 18(B), when the side surface of the center electrode 20 is shielded by the insulating material, the erosion volume at the front end of the center electrode 20 is reduced as compared with when no shielding is provided. In particular, when the exposed length L of the center electrode 20 is set to 0.4 mm or less, a significant effect of suppressing the erosion of the center electrode caused by plasma is achieved.

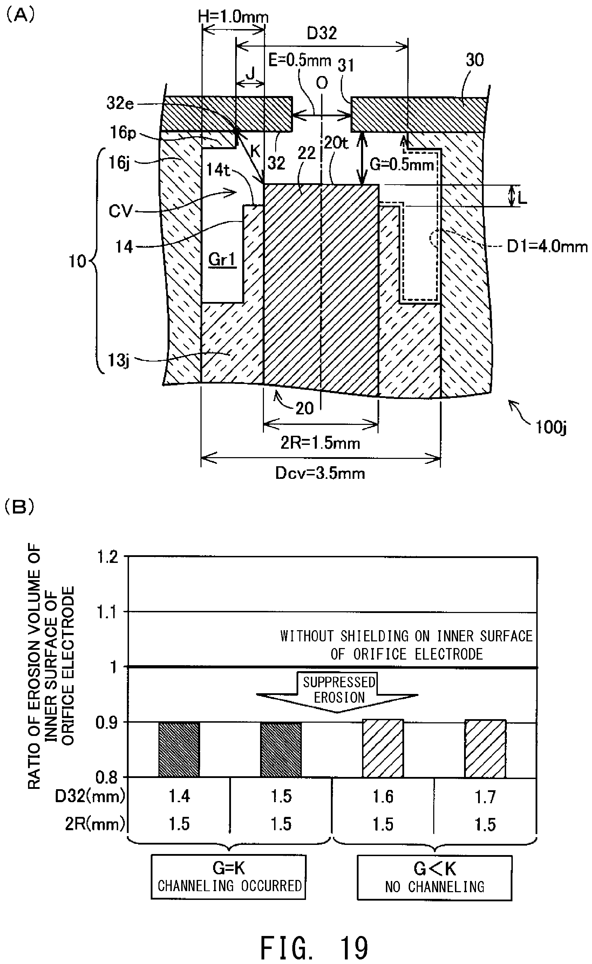

FIG. 19 shows explanatory diagrams showing test results for covering of an inner surface of the orifice electrode 30 by an insulator. FIG. 19(A) shows the shape of samples, and this shape corresponds to the shape of the tenth embodiment as shown in FIG. 17. In this test, the following parameters were used.

- The shortest surface path length D1: 4.0 mm
- The inner diameter E of the through hole 31 of the orifice electrode 30: 0.5 mm
- The aerial gap G: 0.5 mm
- The outer diameter 2R of the center electrode 20: 1.5 mm
- The inner diameter Dcv (inner diameter of the enlarged inner diameter portion 16f) of the cavity CV: 3.5 mm
- The distance H between the side surface of the center electrode 20 and the inner wall surface of the cavity CV: 1.0 mm
- The outer diameter D32 of the exposed surface 32 on the inner surface of the orifice electrode 30: 1.4 to 1.7 mm

Here, the outer diameter D32 of the exposed surface 32 is the same as the inner diameter of the front end opening portion 16p that covers the inner surface around the through hole 31 of the orifice electrode 30. The distance J between the outermost circumferential position 32e of the exposed surface 32 and the side surface of the center electrode 20, as measured along the radial direction, is equal to J = (D32 - 2R)/2.

FIG. 19(B) is a graph showing test results for a relationship between the outer diameter D32 of the exposed surface 32 on the inner surface of the orifice electrode 30 and the erosion volume of the inner surface of the orifice electrode 30. The vertical axis represents a ratio obtained by dividing the erosion volume of the inner surface of the orifice electrode 30 with shielding on the inner surface of the orifice electrode 30 by the erosion volume thereof without shielding on the inner surface of the orifice electrode 30. Here, "with shielding on the inner surface of the orifice electrode 30" means that the inner surface of the orifice electrode 30 is covered with the front end opening portion 16p of the insulator 10. On the other hand, "without shielding on the inner surface of the orifice electrode 30" means that the inner surface of the orifice electrode 30 is not covered with the front end opening portion 16p of the insulator 10. The "erosion volume" is a value obtained by determining a volume that has been lost from the inner surface of the orifice electrode 30 after performing a spark discharge durability test at 30 Hz for 30 hours.

As shown at the lower end of FIG. 19(B), when D32 = 1.4 mm or 1.5 mm, the distance K between the outermost circumferential position 32e of the exposed surface 32 and the front end of the center electrode 20 is equal to the aerial gap G. In these cases, slight channeling occurred in the front end opening portion 16p of the insulator 10. On the other hand, when D32 = 1.6 mm or 1.7 mm, the distance K between the outermost circumferential position 32e of the exposed surface 32 and the front end of the center electrode 20 is larger than the aerial gap G. In these cases, no channeling occurred in the front end opening portion 16p of the insulator 10. The reason is presumably that if G < K is satisfied, surface discharge is less likely to occur along a path from the front end of the center electrode 20 to the insulating material (front end opening portion 16p) covering the inner surface around the through hole 31 of the orifice electrode 30.

As can be understood from the results shown in FIG. 19(B), it is preferable that the inner surface of the orifice electrode 30 is shielded with the insulating material, since the erosion volume on the inner surface of the orifice electrode 30 is reduced as compared with when no shielding is provided. It can also be understood that, in order to reduce the likelihood of occurrence of surface discharge, it is preferable that inner surface around the through hole 31 of the orifice electrode 30 is covered with an insulating material so as to satisfy G < K.

E. Still other embodiments:

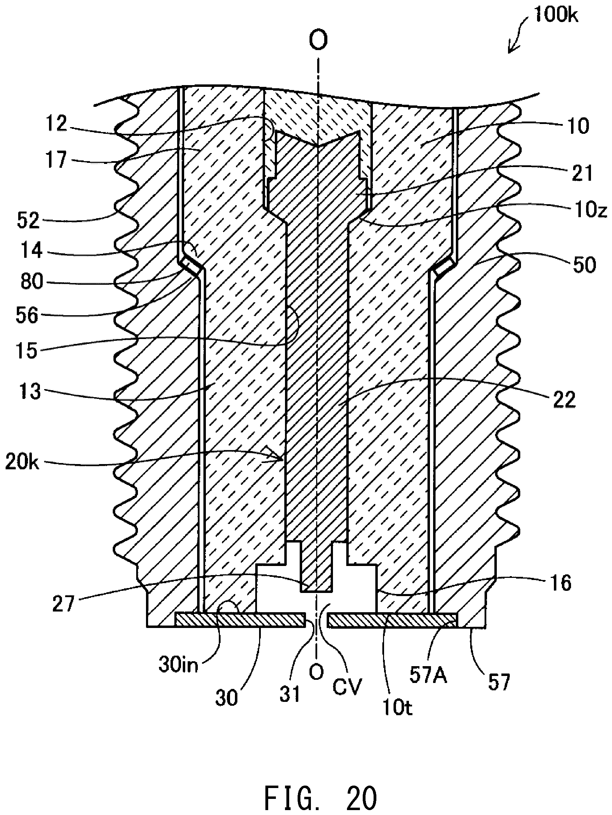

FIG. 20 is an enlarged cross-sectional view of a front end portion of a plasma jet plug 100k according to an eleventh embodiment. In the plasma jet plug 100k, a center electrode 20k includes a head portion 21 located on the rearmost side, a nose portion 22 located on the front side relative to the head portion 21 and having a smaller outer diameter than the head portion 21, and a front end small diameter portion 27 located on the frontmost side and having the smallest outer diameter. The rest of the configuration of the plasma jet plug 100k is substantially the same as that shown in FIG. 2, and therefore, the description thereof has been omitted here.

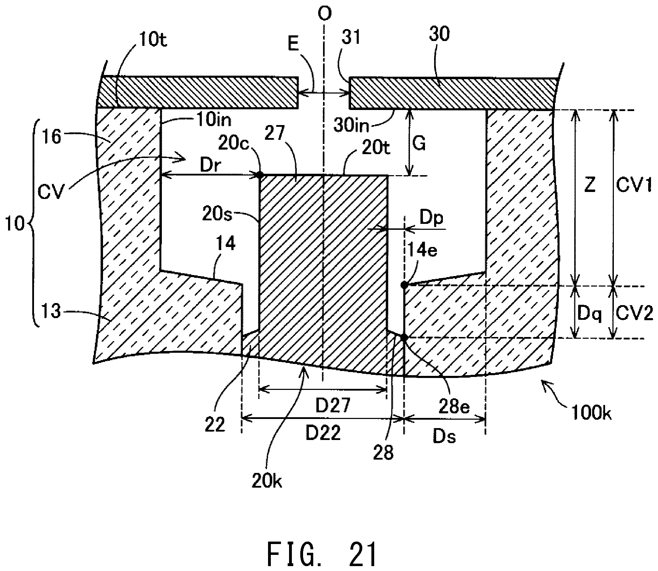

FIG. 21 is an enlarged view, in cross section, of a front end portion of the plasma jet plug 100k according to the eleventh embodiment. Note that FIG. 21 is shown upside down relative to FIGS. 1 and 20. That is, the upper side of FIG. 21 corresponds to the front side of the plasma jet plug 100k, and the lower side of FIG. 21 corresponds to the rear side of the plasma jet plug 100k.

As described previously, the nose portion 22 and the front end small diameter portion 27 are formed in the vicinity of the front end of the center electrode 20k. Each of the nose portion 22 and the front end small diameter portion 27 has a columnar shape. A reduced diameter portion 28 is provided between the nose portion 22 and the front end small diameter portion 27. Although the reduced diameter portion 28 is tapered in the example shown in FIG. 21, the reduced diameter portion 28 may be formed so as to constitute a surface perpendicular to the axial line O instead of being tapered.

At a long nose portion 13 in the vicinity of the front end of the insulator 10, an enlarged inner diameter portion 16 having a larger inner diameter than the long nose portion 13 is formed. Note that the long nose portion 13 is also referred to as "small inner diameter portion 13". A reduced diameter portion 14 is formed between the long nose portion 13 and the enlarged inner diameter portion 16. Although the reduced diameter portion 14 is tapered in this example, the reduced diameter portion 14 may be formed so as to constitute a surface perpendicular to the axial line O instead of being tapered. The reduced diameter portion 14 of the insulator 10 is provided on the front side relative to the reduced diameter portion 28 of the center electrode 20k. The outer circumference of the front end small diameter portion 27 of the center electrode 20k and the inner surface of the long nose portion 13 of the insulator 10 are spaced apart by a distance Dp. The circular groove portion having a width equal to the distance Dp corresponds to a second cavity portion CV2 described below.

The cavity CV is a space surrounded by a surface 20s of the center electrode 20k, an inner surface lOin of the insulator 10, and an inner surface 30in of the orifice electrode 30. However, the cavity CV does not include a portion constituted by the through hole 31 of the orifice electrode 30, and means a space inside the inner surface 30in of the orifice electrode 30, assuming that the through hole 31 is not provided. Between the outer circumferential surface of the nose portion 22 of the center electrode 20k and the inner surface of the insulator 10, a minute clearance (less than 0.06 mm) is formed for assembly of the two components. A space with a clearance of less than 0.06 mm is a minute space in which no plasma will be generated, and therefore does not function as a part of the cavity CV. As used herein, "cavity" means a space in which plasma can be generated, and also means a space having a clearance of 0.06 mm or more. To be more specific, the "cavity" in the eleventh embodiment shown in FIG. 21 means a space that can be formed between the inner surface lOin of the front end portion of the insulator 10, the surface of the front end portion of the center electrode 20k, and the inner surface 30in of the orifice electrode 30 and has a clearance of 0.06 mm or more, and the "cavity" does not include a space having a clearance of less than 0.06 mm. The cavity CV can be classified into the following two cavities.

(a) First cavity portion CV1: a cavity portion present on the front side relative to a rear end 14e of the reduced diameter portion 14 of the insulator 10.
(b) Second cavity portion CV2: a cavity portion present on the rear side relative to the rear end 14e of the reduced diameter portion 14 of the insulator 10.

In FIG. 21, the following dimensions are further given.

(1) Dp: the distance (referred to as "radial spatial distance Dp") between the outer circumference of the front end small diameter portion 27 of the center electrode 20k and the long nose portion 13 of the insulator 10. The radial spatial distance Dp corresponds to the width of the second cavity portion CV2.
(2) Dq: the distance between a rear end 28e of the reduced diameter portion 28 of the center electrode 20k and the rear end 14e of the reduced diameter portion 14 of the insulator 10. The distance Dq corresponds to the depth, in the axial direction, of the second cavity portion CV2.
(3) Dr: the shortest distance between the front end edge 20c of the center electrode 20k and the inner surface lOin of the insulator 10. Note that the "shortest distance" means a minimum value obtained when the distance from the front end edge 20c of the center electrode 20k to the inner surface lOin of the insulator 10 was measured in a given direction.
(4) Ds: a difference between the inner radius of the enlarged inner diameter portion 16 of the insulator 10 and the inner radius of the long nose portion 13. The difference Ds corresponds to a difference between the inner radius of the enlarged inner diameter portion 16 of the insulator 10 and the outer radius of the nose portion 22 of the center electrode 20k.
(5) D27: the outer diameter of the front end small diameter portion 27 of the center electrode 20k.
(6) D22: the outer diameter of the nose portion 22 of the center electrode 20k.
(7) E: the inner diameter of the through hole 31 of the orifice electrode 30.
(8) G: the distance, in the axial direction, between the inner surface 30in of the orifice electrode 30 and the front end surface 20t of the center electrode 20k. The distance G is also referred as "aerial gap G".
(9) Z: the distance between the inner surface 30in of the orifice electrode 30 and the rear end 14e of the reduced diameter portion 14 of the insulator 10. The distance Z corresponds to the depth, in the axial direction, of the first cavity portion CV1.

It is preferable that the inner diameter E of the through hole 31 of the orifice electrode 30 is smaller than the outer diameter D27 of the front end small diameter portion 27 of the center electrode 20k. This is to facilitate aerial discharge in the aerial gap G.

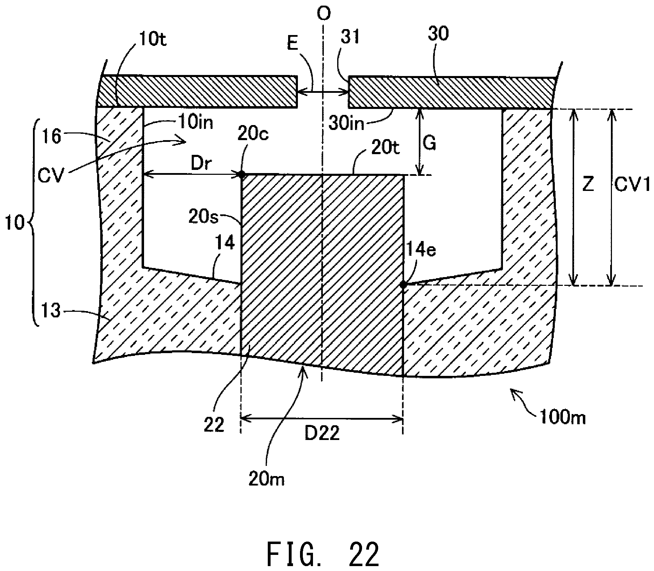

FIG. 22 is an enlarged view, in cross section, of a front end portion a plasma jet plug 100m according to a twelfth embodiment. A center electrode 20m of the plasma jet plug 100m does not include the front end small diameter portion 27 included in the center electrode 20k of the plasma jet plug 100k shown in FIG. 21, and has a shape in which the nose portion 22 is directly extended to the front end. Accordingly, the second cavity portion CV2 present in the plasma jet plug 100k shown in FIG. 21 is not present in the plasma jet plug 100m shown in FIG. 22.

Also in the plasma jet plug 100m shown in FIG. 22, which does not have the second cavity portion CV2, by ensuring a sufficiently large shortest distance Dr between the front end edge 20c of the center electrode 20m and the inner surface lOin of the insulator 10, it is possible to reduce the likelihood of occurrence of surface discharge so as to allow aerial discharge to occur in a stable manner. However, by providing the second cavity portion CV2 as in FIG. 21, the shortest distance Dr between the front end edge 20c of the center electrode 20m and the inner surface lOin of the insulator 10 can be increased, so that it is possible to suppress the occurrence of surface discharge, and to keep the overall capacity of the cavity CV small, making it possible to facilitate ejection of plasma.

In the following, results of several tests performed by using the dimensions for the plasma jet plugs shown in FIGS. 21 and 22 as parameters will be described sequentially.

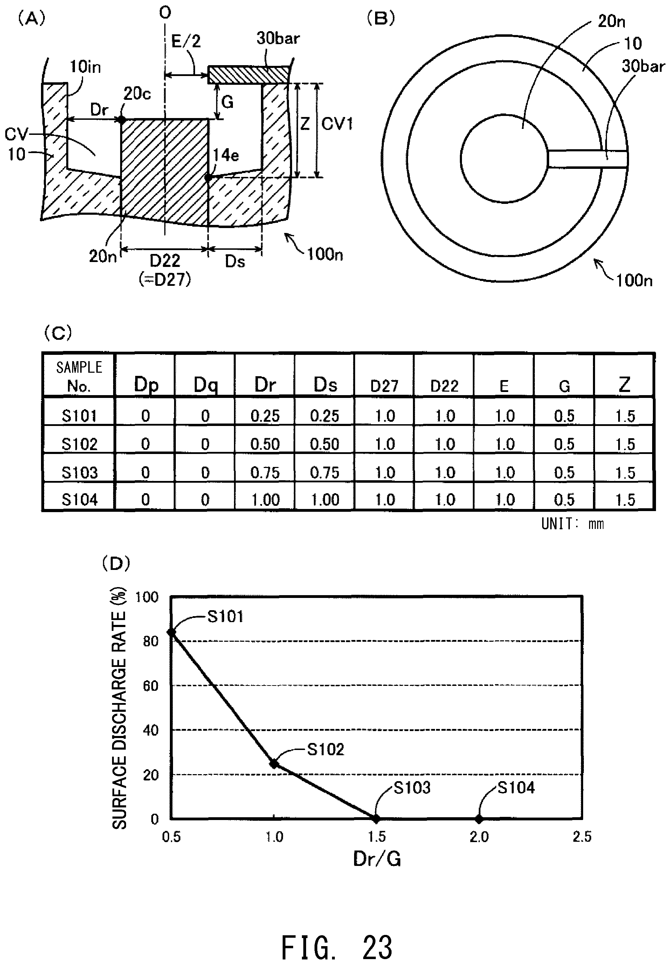

FIG. 23 shows results of a discharge path confirmation test for the relationship between the shortest distance Dr between the front end edge 20c of the center electrode 20n and the inner surface lOin of the insulator 10, and the aerial gap G. Here, FIG. 23(A) shows a vertical cross-sectional view of a plasma jet plug 100n for the discharge path confirmation test, and FIG. 23(B) shows a plan view thereof. The plasma jet plug 100n has a configuration in which the orifice electrode 30 of the plasma jet plug 100m shown in FIG. 22, which has no second cavity portion CV2, has been replaced by a bar-shaped electrode 30bar. The reason is that it is difficult to image the inside of the cavity CV from the through hole 31 (FIG. 22) of the orifice electrode 30. In the discharge path confirmation test, the plasma jet plug 100n was mounted in a pressure chamber, and discharge was performed 100 times, with the interior of the pressure chamber being pressurized to 1.0 MPa (in atmosphere). At this time, the discharge path in the cavity CV was imaged by using a high-speed camera, and the percentage of times that surface discharge had occurred, out of 100 times of discharge, was determined.

FIG. 23(C) shows various dimensions of samples S101 to S104 for which the value of the ratio Dr/G between the shortest distance Dr between the front end edge 20c of the center electrode 20n and the inner surface lOin of the insulator 10 and the aerial gap G was used as parameters. Since the samples S101 to S104 do not have a second cavity portion CV2, the dimensions Dp and Dq related to the second cavity portion CV2 have a value of zero, and Dr = Ds. In this test, the four samples S101 to S104, for which the aerial gap G was fixed at 0.5 mm and the value of the shortest distance Dr was changed in the range of 0.25 mm to 1.00 mm, were used.

FIG. 23(D) shows the surface discharge rate obtained by the discharge path confirmation test. According to these test results, the surface discharge rate decreased with an increase in the value of Dr/G. When Dr/G became 1.5 or more, no surface discharge occurred, and all the discharges were aerial discharges. In view of the results, it is preferable that the value of the ratio Dr/G of the shortest distance Dr to the aerial gap G is as large as possible. It is particularly preferable that the following relationship is satisfied.

$$1.5 \times G \leq Dr \quad \ldots(1)$$

If the expression (1) is satisfied, the shortest distance Dr between the front end edge 20c of the center electrode 20n and the inner surface lOin of the insulator 10 is sufficiently larger than the aerial gap G, so that surface discharge is less likely to occur, making it possible to allow aerial discharge to occur in a stable manner. As a result, it is possible to suppress the occurrence of channeling.

The relationship represented by the above expression (1) is presumably applicable not only to the plasma jet plug 100m as shown in FIG. 22, which does not have the second cavity portion CV2, but also to the plasma jet plug 100k as shown in FIG. 21, which has the second cavity portion CV2. The reason is that if the above expression (1) is satisfied, the shortest distance Dr is also sufficiently larger than the aerial gap G when the second cavity portion CV2 is present, so that it can be expected that surface discharge is less likely to occur, allowing aerial discharge to occur in a stable manner.

In the sense of making aerial discharge more likely to occur than surface discharge, the value Dr is preferably set so as to satisfy the above expression (1). However, on the other hand, the value of Dr preferably falls within such a range that the capacity of the cavity CV will not be excessively increased. The reason is that when the capacity of the cavity CV is excessively increased, the plasma ejection performance may be deteriorated. In this sense, the value of Dr is, for example, preferably 2 mm or less, more preferably 1.5 mm or less, most preferably 1 mm or less.

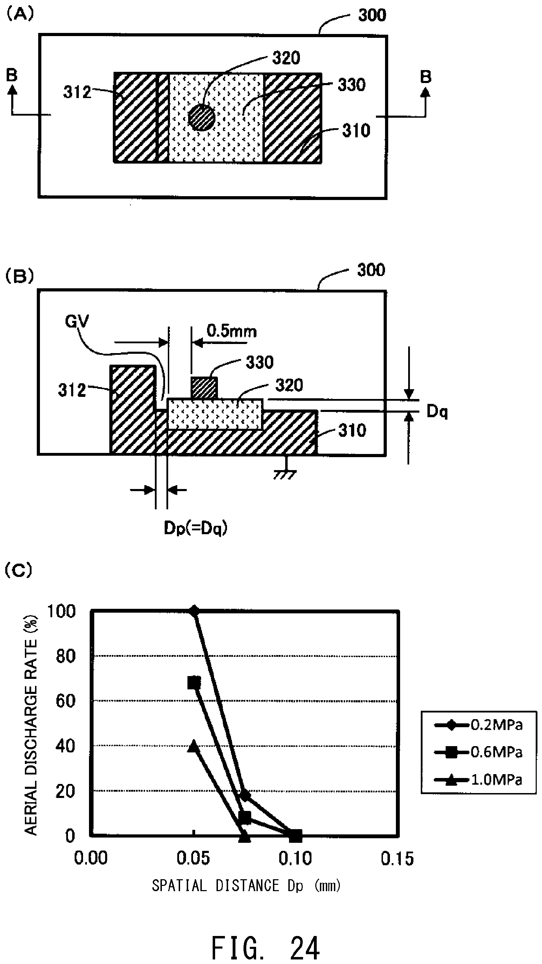

FIG. 24 shows explanatory diagrams showing discharge test results for the radial spatial distance Dp of the second cavity portion CV2. FIG. 24(A) is a schematic plan view of a testing apparatus, and FIG. 24(B) is a cross-sectional view thereof taken along the line B-B. In this test, a first electrode 210 was placed in a pressure chamber 300, an insulator 220 having a rectangular parallelepiped shape is fitted into a recess in the upper surface of the first electrode 210, and a columnar second electrode 230 was placed on the insulator 220. A wall portion 212 extending vertically upward was formed at one end of the first electrode 210, and a spatial distance Dp was set between the wall portion 212 and the insulator 220. Of a surface path extending from a side surface of the second electrode 230 toward the wall portion 212 of the first electrode 210, the surface distance on the insulator 220 was set to 0.5 mm. Additionally, the distance Dq between the upper surface of the first electrode 210 and the upper surface of the insulator 220 was varied by changing the thickness of the insulator 220 to several values. The spatial distance Dp was adjusted such that the distance Dq was equal to the spatial distance Dp. The wall portion 212 of the first electrode 210 simulates the center electrode 20k shown in FIG. 21, the groove portion GV between the wall portion 212 of the first electrode 210 and the insulator 220 simulates the second cavity portion CV2 shown in FIG. 21. That is, the spatial distance Dp shown in FIG. 24(B) simulates the radial spatial distance Dp of the second cavity portion CV2 (FIG. 21), and the distance Dq shown in FIG. 24(B) simulates the depth Dq of the second cavity portion CV2.

In the discharge test, discharge was performed 100 times for each case, with the interior of the pressure chamber being pressurized to 0.2 mPa, 0.6 MPa, and 1.0 MPa (all in atmosphere). Then, the discharge path was imaged by using a high-speed camera, and the percentage of times that aerial discharge had occurred, out of 100 times of discharge, was determined. Here, "aerial discharge" means a discharge not passing through a surface path along the surface of the insulator 220, and "surface discharge" means a discharge passing through a surface path along the surface of the insulator 220.

FIG. 24(C) shows a relationship between the spatial distance Dp and the aerial discharge rate. According to the test results, the aerial discharge rate decreased with an increase in the value of the spatial distance Dp. When the spatial distance Dp became 0.1 mm or more, no aerial discharge occurred, and all the discharges were surface discharges. The results can be understood as follows. That is, as the spatial distance Dp shown in FIG. 24(B) increases, aerial discharge that laterally arrives at the second electrode 230 through the air from the surface of the wall portion 212 of the first electrode 210 is less likely to occur. By applying this to the plasma jet plug 100k as shown in FIG. 21, it can be presumed that as the radial spatial distance Dp of the second cavity portion CV2 increases, discharge along the surface path of the inner surface of the insulator 10 after jumping over the groove portion of the second cavity portion CV2 through the air from the side surface of the center electrode 20k is less likely to occur. Accordingly, in order to suppress surface discharge in the plasma jet plug 100k as shown in FIG. 21, which has the second cavity portion CV2, the radial spatial distance Dp of the second cavity portion CV2 is preferably large, particularly 0.1 mm or more. This makes it possible to suppress the occurrence of surface discharge so as to allow aerial discharge to occur in a stable manner.

In the sense of making aerial discharge more likely to occur than surface discharge, the radial spatial distance Dp of the second cavity portion CV2 is preferably 0.1 mm or more. However, on the other hand, the value of Dp preferably falls within such a range that the capacity of the second cavity portion CV2 will not be excessively increased. In this sense, the value of Dp is, for example, preferably 1 mm or less, more preferably 0.7 mm or less, more preferably 0.5 mm or less.

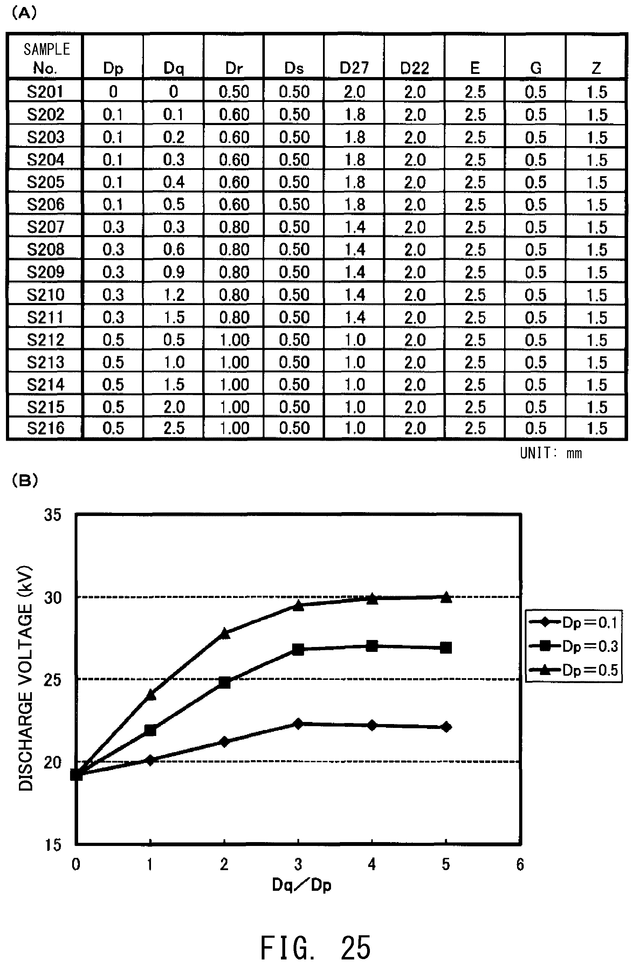

FIG. 25 shows test results for the ratio Dq/Dp between the depth Dq and the radial spatial distance Dp of the second cavity portion CV2. In this test, a plasma jet plug 100k was mounted in a pressure chamber, and discharge was performed 100 times, with the interior of the pressure chamber being pressurized to 1.0 MPa (in atmosphere), and the discharge voltage was measured. Here, the "discharge voltage" means a voltage at which dielectric breakdown has occurred as a result of application of a high voltage.

FIG. 25(A) shows the dimensions of samples S201 to S216. The sample S201 is a plug having the shape shown in FIG. 22, which does not have the second cavity portion CV2. The samples S202 to S206 are samples for which the radial spatial distance Dp of the second cavity portion CV2 was set to a fixed value of 0.1 mm and the depth Dq of the second cavity portion CV2 was varied. The samples S207 to S211 are samples for which the radial spatial distance Dp of the second cavity portion CV2 was set to a fixed value of 0.3 mm and the depth Dq of the second cavity portion CV2 was varied. The samples S212 to S215 are samples for which the radial spatial distance Dp of the second cavity portion CV2 was set to a fixed value of 0.5 mm and the depth Dq of the second cavity portion CV2 was varied. Note that the difference in the radial spatial distance Dp between the three sample groups S202 to S206, S207 to S211, and S212 to S216 was adjusted by changing the outer diameter D27 of the front end small diameter portion 27 of the center electrode 20k. In this test, for all the samples S201 to S216, the inner diameter E of the through hole 31 of the orifice electrode 30 was set to 2.5 mm, which was an excessively larger value than a normal value (about 1.0 mm). The reason for this is to make it certain that surface discharge always occurs, without the occurrence of aerial discharge from the center electrode 20k to the orifice electrode 30.

FIG. 25(B) shows a relationship between the value of Dq/Dp and the discharge voltage. As can be understood from this result, the discharge voltage tends to increase with an increase in the value of Dq/Dp. As described above, the samples used in this test have a shape in which surface discharge always occurs without the occurrence of aerial discharge from the center electrode 20k to the orifice electrode 30. Accordingly, the higher the discharge voltage in FIG. 25(B), the higher the likelihood that aerial discharge from the center electrode 20k to the orifice electrode 30 occurs in the actual plasma jet plug 100k. Therefore, it is preferable that the discharge voltage in this test is high, since aerial discharge is likely to occur and surface discharge is less likely to occur. Specifically, it is preferable that the value of Dq/Dp of the ratio between the depth Dq and the radial spatial distance Dp of the second cavity portion CV2 exceeds 0 (i.e., that the second cavity portion CV2 is present). Even when the value of Dq/Dp becomes 3 or more, the discharge voltage will not increase further. Accordingly, it is sufficient that the value of Dq/Dp is 3 or less.

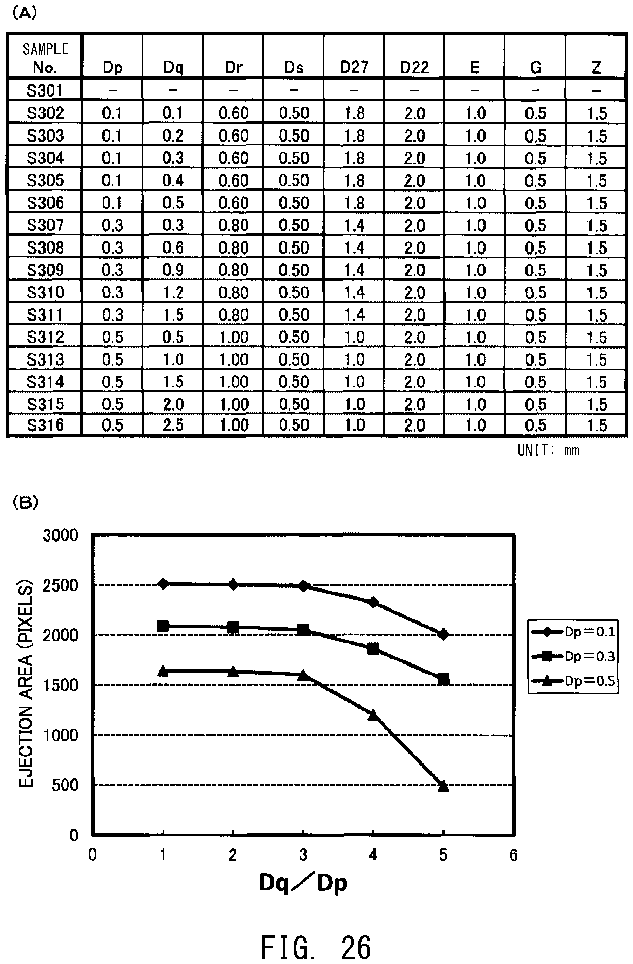

FIG. 26 shows results of a plasma ejection test for the ratio Dq/Dp between the depth Dq and the radial spatial distance Dp of the second cavity portion CV2. In this test, the plasma jet plug 100k was discharged, with the interior of the pressure chamber being pressurized to 0.6 MPa (in atmosphere), and the plasma that had been ejected from the through hole 31 of the orifice electrode 30 was imaged from the side, to obtain a schlieren image. Then, the schlieren image was binarized so as to be classified into pixels representing a high density portion and pixels representing a low density portion, and the number of the pixels representing a high density portion was calculated as the size of the ejected plasma. Note that the schlieren imaging was performed 10 times for each sample, and an average of the number of pixels of the plasma calculated by the 10 times of imaging was determined as the ejection area.

FIG. 26(A) shows the dimensions of samples S302 to S316. The dimensions of the samples S302 to S316 are the same as those of the samples S202 to S216 shown in FIG. 25(A) except that the inner diameter E of the through hole 31 of the orifice electrode 30 was set to 1.0 mm (normal value). The reason that the inner diameter E of the through hole 31 of the orifice electrode 30 was set to 1.0 mm for the samples S302 to S316 shown in FIG. 26(A) is to cause aerial discharge in the aerial gap G between the center electrode 20k and the orifice electrode 30.

FIG. 26(B) shows a relationship between the value of Dq/Dp and the ejection area of plasma. As can be understood from the test results, the ejection area of plasma tends to decrease with an increase in the value of Dq/Dp. Therefore, according to the result shown in FIG. 26(B), it is preferable that the value of the ratio Dq/Dp between the depth Dq and the radial spatial distance Dp of the second cavity portion CV2 is small. However, even when the value of Dq/Dp becomes smaller than 3, the ejection area of plasma will not increase very much. Accordingly, it is sufficient that the value of Dq/Dp is 3 or less.

In view of the results shown in FIGS. 25 and 26 described above, it is preferable that the radial spatial distance Dp and the depth Dq of the second cavity portion CV2 satisfy the following relationship.

$$0 < Dq \leq 3 \times Dp \quad ...(2)$$

By setting the depth Dq of the second cavity portion CV2 in the range represented by the expression (2), it is possible to increase the tendency that aerial discharge is more likely to occur than surface discharge (FIG. 25(B)). Further, it is possible to prevent the capacity of the second cavity portion from being excessively increased, thus facilitating ejection of plasma (FIG. 26(B)).

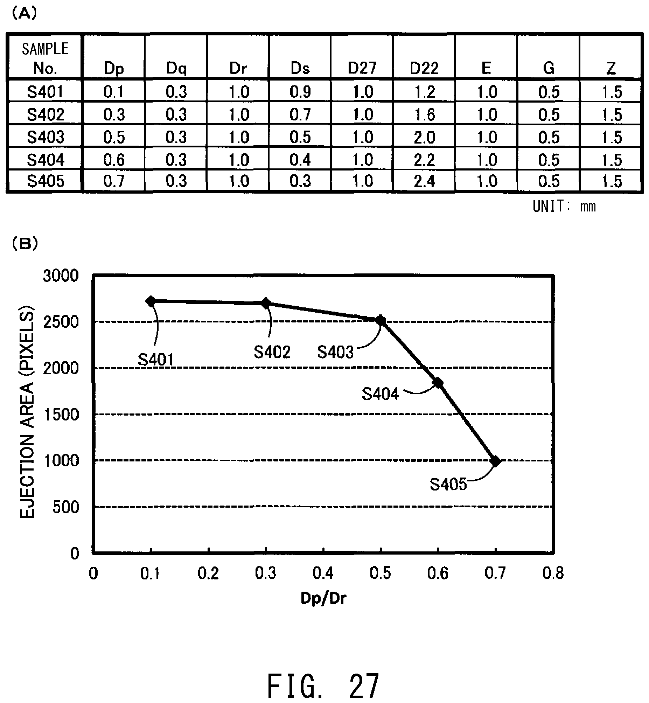

FIG. 27 shows results of a plasma ejection test for the ratio Dp/Dr between the radial spatial distance Dp of the second cavity portion CV2 and the shortest distance Dr between the front end edge 20c of the center electrode 20k and the inner surface lOin of the insulator 10. The plasma ejection test was performed under the same conditions as those used in FIG. 26, except for the shape of samples.

FIG. 27(A) shows the dimensions of samples S401 to S405. For the samples S401 to S405, the radial spatial distance Dp of the second cavity portion CV2 was varied by changing the outer diameter D22 of the nose portion 22 of the center electrode 20k. However, the difference Ds between the inner radius of the enlarged inner diameter portion 16 and the inner radius of the long nose portion 13 of the insulator 10 was adjusted such that the shortest distance Dr between the front end edge 20c of the center electrode 20k and the inner surface lOin of the insulator 10 had a fixed value (1.0 mm).

FIG. 27(B) shows a relationship between the value of Dp/Dr and the ejection area of plasma. As can be understood from the test results, the ejection area of plasma tends to decrease with an increase of the value of Dp/Dr. Therefore, according to the results shown in FIG. 27(B), it is preferable that the value of Dp/Dr is small. However, even when the value of Dq/Dp becomes smaller than 0.5, the ejection area f plasma will not increase further. Accordingly, it is sufficient that the value of Dq/Dp is 0.5 or less. Note that in the structure shown in FIG. 21, Dp represents the distance from the side surface (outer circumferential surface) of the center electrode 20k to the wall surface of the insulator 10 that constitutes the outer circumference of the second cavity portion CV2. Dr represents the shortest distance from the front end edge 20c of the center electrode 20k to the inner surface lOin of the insulator 10 that constitutes the outer circumference of the first cavity portion CV1. The results shown in FIG. 27(B) can be understood to mean that when the value of the ratio Dp/Dr between these distances exceeds 0.5, plasma becomes likely to spread deeply into the second cavity portion CV2, so that ejection force for ejecting plasma from the through hole 31 of the orifice electrode 30 to the outside is reduced.

In view of the test results as shown in FIG. 27(B), it is preferable that the relationship between the radial spatial distance Dp of the second cavity portion CV2 and the shortest distance Dr between the front end edge 20c of the center electrode 20k and the inner surface lOin of the insulator 10 satisfies the following relationship.

$$(Dp/Dr) \leq 0.5 \quad ...(3)$$

By setting Dp/Dr so as to satisfy the expression (3), it is possible to further facilitate ejection of plasma.

• Modified embodiments

The present invention is not limited to the above embodiments and modes and may be embodied in various other forms without departing from the scope of the invention.

• Modified embodiment 1:

The structural features described with reference to FIGS. 4 to 19 and the structural features described with reference to FIGS. 21 to 27 may be used together or separately.

• Modified embodiment 2:

As the configuration of the plasma jet plug, it is possible to use various configurations other than those shown in FIGS. 4 to 9, FIGS. 14 to 17, and FIGS. 21 to 22. For example, the center electrode 20 in the vicinity of the front end may not have a simple columnar shape, and may be provided with irregularities on the surface thereof.

The front end of the center electrode 20 may not have the shape of a sharp edge, and may be chamfered (e.g., R-chambered or C-chambered). This makes electric field concentration less likely to occur, so that it is possible to further suppress the erosion of the center electrode 20 caused by the heat of plasma.

DESCRIPTION OF REFERENCE NUMERALS

4: seal member
5: gasket
6: ring member
9: talc
10: insulator
10z: reduced inner diameter portion of insulator
lOin: inner surface of insulator
12: axial hole of insulator
13: long nose portion (small inner diameter portion) of insulator
13c, 13d, 13e: first member
14: reduced diameter portion of insulator
15: electrode housing portion of insulator
16: enlarged inner diameter portion of insulator
16c to 16j: second member of insulator
16p: front end opening portion of insulator
17: front trunk portion of insulator
18: rear trunk portion of insulator
19: flange portion of insulator
20, 20k to 20n: center electrode
20f: side surface of center electrode
20s: surface of center electrode
20t: front end surface of center electrode
21: head portion of center electrode
22: nose portion of center electrode
30: orifice electrode
30in: inner surface of orifice electrode
31: through hole of orifice electrode
32: exposed surface of orifice electrode
32e: outermost circumferential position of exposed surface of orifice electrode
40: metal terminal
50: metal shell
51: tool engagement portion of metal shell
52: thread portion of metal shell
53: crimp portion of metal shell
54: flange portion of metal shell
55: seating portion of metal shell
56: locking portion of metal shell
57: front end portion of metal shell
57A: recess of front end portion of metal shell
80: packing
100, 100a to 100n, 100r: plasma jet plug
120: ignition device
130: control circuit portion
140: spark discharge circuit portion
160: plasma discharge circuit portion
161: high voltage generation circuit
162: condenser
210: insulator
210s: upper surface of insulator

212: groove portion of insulator
220: first electrode
230: second electrode

**Claims**

1. A plasma jet plug comprising:

   a tubular insulator having an axial hole extending along an axial direction;
   a center electrode disposed inside the axial hole;
   a metal shell disposed on an outer circumference of the insulator; and
   an orifice electrode electrically connected to the metal shell and disposed on a front side of the insulator,
   a plasma generating cavity being formed by a surface of the center electrode, an inner surface of the insulator, and an inner surface of the orifice electrode, wherein
   a shortest path length D1 of a surface path is greater than or equal to 5 times an aerial gap G, the surface path extending, inside the cavity, from a surface of the center electrode via an inner surface of the insulator to an inner surface of the orifice electrode, the aerial gap G being a shortest distance between the center electrode and the orifice electrode.

2. The plasma jet plug according to claim 1, wherein the inner surface of the insulator includes at least one groove portion that forms a recessed path on the surface path, and
   the groove portion has a groove width of 0.1 mm or more.

3. The plasma jet plug according to claim 2, wherein the groove portion has a depth that is less than or equal to 3 times the groove width.

4. The plasma jet plug according to any one of claims 1 to 3, wherein
   a side surface of the center electrode that faces the cavity has a surface area of 20 mm$^2$ or less.

5. The plasma jet plug according to any one of claims 2 to 4, wherein
   a portion of the insulator that faces the cavity is formed of a plurality of members.

6. The plasma jet plug according to claim 5, wherein the plurality of members of the insulator include a first member provided on an outer circumferential side of the center electrode, and a second member provided on an outer circumferential side of the first member, and
   the first member is formed from a first insulating material having a higher coefficient of thermal conductivity than the second member, and the second member is formed from a second insulating material having a higher dielectric strength than the first member.

7. The plasma jet plug according to any one of claims 1 to 6, wherein
a side surface of the center electrode in the cavity is covered with an insulating material, and
a distance L from a front end of the insulating material provided on the side surface of the center electrode to a front end of the center electrode is 0.4 mm or less.

8. The plasma jet plug according to claim 7, wherein
a distance H between the side surface of the center electrode and an inner wall surface of the cavity, as measured along a direction perpendicular to the axial direction, is larger than the aerial gap G.

9. The plasma jet plug according to claim 7 or 8, wherein
the inner surface of the orifice electrode around a through hole of the orifice electrode is covered with an insulating material so as to leave an exposed surface adjacent to the through hole, and
a distance J between an outermost circumferential position of the exposed surface and the side surface of the center electrode, as measured along a direction perpendicular to the axial direction, is smaller than the distance H.

10. The plasma jet plug according to claim 9, wherein
a distance K between the outermost circumferential position of the exposed surface and the front end of the center electrode is larger than the aerial gap G.

11. The plasma jet plug according to any one of claims 1 to 10, wherein
a relationship between the aerial gap G and the shortest distance Dr between a front end edge of the center electrode and the inner surface of the insulator satisfies $1.5 \times G \le Dr$.

12. The plasma jet plug according to claim 11, wherein
the inner surface of the insulator that faces the cavity includes a reduced diameter portion provided such that the inner surface of the insulator is reduced in diameter toward a rear side of the insulator, and
the cavity includes a first cavity portion located on a front side relative to a rear end of the reduced diameter portion of the insulator, and a second cavity portion located on a rear side relative to the rear end of the reduced diameter portion.

13. The plasma jet plug according to claim 12, wherein
a radial spatial distance Dp is 0.1 mm or more, the radial spatial distance Dp being a distance between the surface of the center electrode and the inner surface of the insulator in the second cavity portion, as measured in a radial direction perpendicular to the axial direction.

14. The plasma jet plug according to claim 13, wherein
a depth Dq of the second cavity portion, as measured along the axial direction, satisfies $0 < Dq \le 3 \times Dp$.

15. The plasma jet plug according to claim 14, wherein
a relationship between the radial spatial distance Dp of the second cavity portion and the shortest distance Dr between the front end edge of the center electrode and the inner surface of the insulator satisfies $Dp/Dr \le 0.5$.

100

O

40

12

18

10

53
6
9
51
7

19
54

4
17
52
80
56
15
20
13
16
57

30

50

55
5

O

# FIG. 1

FIG. 2

ECU                                                        ECU

120

130                          160                          150

CONTROL                                                    CONTROL
CIRCUIT                                                    CIRCUIT
PORTION                                                    PORTION

140                                                        161

SPARK                                    HIGH VOLTAGE
DISCHARGE                                GENERATION
CIRCUIT                                  CIRCUIT
PORTION

162

PLASMA
DISCHARGE
CIRCUIT PORTION

20      100

30

FIG. 3

FIG. 4

FIG. 5

FIG. 6

FIG. 7

FIG. 8

FIG. 9

(A)

Da: GROOVE WIDTH (Da=0.2mm)
Dd: GROOVE DEPTH
Dg: AERIAL GAP (Dg=0.5mm)
DL: GROOVE PORTION PATH LENGTH (DL=Da+2Dd)

(B)

FIG. 10

(A)

Da: GROOVE WIDTH
Dd: GROOVE DEPTH (SET Dd=Da)
Dg: AERIAL GAP (SET Dg=Da+0.3mm)

(B)

FIG. 11

(A)

(B)

GROOVE DEPTH/GROOVE WIDTH (=Wd1/Wa1)

◆ GROOVE WIDTH 0.2mm
■ GROOVE WIDTH 0.5mm
▲ GROOVE WIDTH 0.3mm

FIG. 12

(A)

(B)

FIG. 13

FIG. 14

FIG. 15

FIG. 16

FIG. 17

(A)

(B)

FIG. 18

(A)

(B)

FIG. 19

FIG. 20

FIG. 21

FIG. 22

(A)

(B)

(C)

| SAMPLE No. | Dp | Dq | Dr | Ds | D27 | D22 | E | G | Z |
|---|---|---|---|---|---|---|---|---|---|
| S101 | 0 | 0 | 0.25 | 0.25 | 1.0 | 1.0 | 1.0 | 0.5 | 1.5 |
| S102 | 0 | 0 | 0.50 | 0.50 | 1.0 | 1.0 | 1.0 | 0.5 | 1.5 |
| S103 | 0 | 0 | 0.75 | 0.75 | 1.0 | 1.0 | 1.0 | 0.5 | 1.5 |
| S104 | 0 | 0 | 1.00 | 1.00 | 1.0 | 1.0 | 1.0 | 0.5 | 1.5 |

UNIT: mm

(D)

FIG. 23

(A)

300

320

B   B

312   330

310

(B)

300

GV

0.5mm

312   330

320

Dq

310

Dp(=Dq)

(C)

AERIAL DISCHARGE RATE (%)

100

80

60

40

20

0

0.00   0.05   0.10   0.15

SPATIAL DISTANCE Dp (mm)

◆ 0.2MPa
■ 0.6MPa
▲ 1.0MPa

FIG. 24

(A)

| SAMPLE No. | Dp | Dq | Dr | Ds | D27 | D22 | E | G | Z |
|---|---|---|---|---|---|---|---|---|---|
| S201 | 0 | 0 | 0.50 | 0.50 | 2.0 | 2.0 | 2.5 | 0.5 | 1.5 |
| S202 | 0.1 | 0.1 | 0.60 | 0.50 | 1.8 | 2.0 | 2.5 | 0.5 | 1.5 |
| S203 | 0.1 | 0.2 | 0.60 | 0.50 | 1.8 | 2.0 | 2.5 | 0.5 | 1.5 |
| S204 | 0.1 | 0.3 | 0.60 | 0.50 | 1.8 | 2.0 | 2.5 | 0.5 | 1.5 |
| S205 | 0.1 | 0.4 | 0.60 | 0.50 | 1.8 | 2.0 | 2.5 | 0.5 | 1.5 |
| S206 | 0.1 | 0.5 | 0.60 | 0.50 | 1.8 | 2.0 | 2.5 | 0.5 | 1.5 |
| S207 | 0.3 | 0.3 | 0.80 | 0.50 | 1.4 | 2.0 | 2.5 | 0.5 | 1.5 |
| S208 | 0.3 | 0.6 | 0.80 | 0.50 | 1.4 | 2.0 | 2.5 | 0.5 | 1.5 |
| S209 | 0.3 | 0.9 | 0.80 | 0.50 | 1.4 | 2.0 | 2.5 | 0.5 | 1.5 |
| S210 | 0.3 | 1.2 | 0.80 | 0.50 | 1.4 | 2.0 | 2.5 | 0.5 | 1.5 |
| S211 | 0.3 | 1.5 | 0.80 | 0.50 | 1.4 | 2.0 | 2.5 | 0.5 | 1.5 |
| S212 | 0.5 | 0.5 | 1.00 | 0.50 | 1.0 | 2.0 | 2.5 | 0.5 | 1.5 |
| S213 | 0.5 | 1.0 | 1.00 | 0.50 | 1.0 | 2.0 | 2.5 | 0.5 | 1.5 |
| S214 | 0.5 | 1.5 | 1.00 | 0.50 | 1.0 | 2.0 | 2.5 | 0.5 | 1.5 |
| S215 | 0.5 | 2.0 | 1.00 | 0.50 | 1.0 | 2.0 | 2.5 | 0.5 | 1.5 |
| S216 | 0.5 | 2.5 | 1.00 | 0.50 | 1.0 | 2.0 | 2.5 | 0.5 | 1.5 |

UNIT: mm

(B)

FIG. 25

44

**(A)**

| SAMPLE No. | Dp | Dq | Dr | Ds | D27 | D22 | E | G | Z |
|---|---|---|---|---|---|---|---|---|---|
| S301 | – | – | – | – | – | – | – | – | – |
| S302 | 0.1 | 0.1 | 0.60 | 0.50 | 1.8 | 2.0 | 1.0 | 0.5 | 1.5 |
| S303 | 0.1 | 0.2 | 0.60 | 0.50 | 1.8 | 2.0 | 1.0 | 0.5 | 1.5 |
| S304 | 0.1 | 0.3 | 0.60 | 0.50 | 1.8 | 2.0 | 1.0 | 0.5 | 1.5 |
| S305 | 0.1 | 0.4 | 0.60 | 0.50 | 1.8 | 2.0 | 1.0 | 0.5 | 1.5 |
| S306 | 0.1 | 0.5 | 0.60 | 0.50 | 1.8 | 2.0 | 1.0 | 0.5 | 1.5 |
| S307 | 0.3 | 0.3 | 0.80 | 0.50 | 1.4 | 2.0 | 1.0 | 0.5 | 1.5 |
| S308 | 0.3 | 0.6 | 0.80 | 0.50 | 1.4 | 2.0 | 1.0 | 0.5 | 1.5 |
| S309 | 0.3 | 0.9 | 0.80 | 0.50 | 1.4 | 2.0 | 1.0 | 0.5 | 1.5 |
| S310 | 0.3 | 1.2 | 0.80 | 0.50 | 1.4 | 2.0 | 1.0 | 0.5 | 1.5 |
| S311 | 0.3 | 1.5 | 0.80 | 0.50 | 1.4 | 2.0 | 1.0 | 0.5 | 1.5 |
| S312 | 0.5 | 0.5 | 1.00 | 0.50 | 1.0 | 2.0 | 1.0 | 0.5 | 1.5 |
| S313 | 0.5 | 1.0 | 1.00 | 0.50 | 1.0 | 2.0 | 1.0 | 0.5 | 1.5 |
| S314 | 0.5 | 1.5 | 1.00 | 0.50 | 1.0 | 2.0 | 1.0 | 0.5 | 1.5 |
| S315 | 0.5 | 2.0 | 1.00 | 0.50 | 1.0 | 2.0 | 1.0 | 0.5 | 1.5 |
| S316 | 0.5 | 2.5 | 1.00 | 0.50 | 1.0 | 2.0 | 1.0 | 0.5 | 1.5 |

UNIT: mm

**(B)**

FIG. 26

(A)

| SAMPLE No. | Dp | Dq | Dr | Ds | D27 | D22 | E | G | Z |
|---|---|---|---|---|---|---|---|---|---|
| S401 | 0.1 | 0.3 | 1.0 | 0.9 | 1.0 | 1.2 | 1.0 | 0.5 | 1.5 |
| S402 | 0.3 | 0.3 | 1.0 | 0.7 | 1.0 | 1.6 | 1.0 | 0.5 | 1.5 |
| S403 | 0.5 | 0.3 | 1.0 | 0.5 | 1.0 | 2.0 | 1.0 | 0.5 | 1.5 |
| S404 | 0.6 | 0.3 | 1.0 | 0.4 | 1.0 | 2.2 | 1.0 | 0.5 | 1.5 |
| S405 | 0.7 | 0.3 | 1.0 | 0.3 | 1.0 | 2.4 | 1.0 | 0.5 | 1.5 |

UNIT: mm

(B)

FIG. 27

**INTERNATIONAL SEARCH REPORT**

| International application No. |
| --- |
| PCT/JP2016/000563 |

A. CLASSIFICATION OF SUBJECT MATTER
*H01T13/54*(2006.01)i, *F02P13/00*(2006.01)i, *H01T13/20*(2006.01)i, *H01T13/32*
(2006.01)i

According to International Patent Classification (IPC) or to both national classification and IPC

B. FIELDS SEARCHED

Minimum documentation searched (classification system followed by classification symbols)
H01T13/54, F02P13/00, H01T13/20, H01T13/32

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2007-134127 A (Denso Corp.),<br>31 May 2007 (31.05.2007),<br>paragraphs [0020], [0027], [0032]; fig. 2 to 3<br>(Family: none) | 1-5,7-11<br>6,12-15 |
| Y | Microfilm of the specification and drawings annexed to the request of Japanese Utility Model Application No. 84765/1983(Laid-open No. 188696/1984)<br>(Mitsubishi Electric Corp.),<br>14 December 1984 (14.12.1984),<br>specification, page 4, line 20 to page 5, line 7; page 5, lines 13 to 16; fig. 2<br>(Family: none) | 1-5,7-11 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>19 April 2016 (19.04.16) | Date of mailing of the international search report<br>10 May 2016 (10.05.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/000563

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2-72577 A (Honda Motor Co., Ltd.), 12 March 1990 (12.03.1990), page 2, upper right column, lines 9 to 18; fig. 2 (Family: none) | 9-11 |
| A | Microfilm of the specification and drawings annexed to the request of Japanese Utility Model Application No. 117706/1979(Laid-open No. 35793/1981) (Nissan Motor Co., Ltd.), 07 April 1981 (07.04.1981), entire text; all drawings (Family: none) | 1-15 |
| A | JP 2011-210709 A (NGK Spark Plug Co., Ltd.), 20 October 2011 (20.10.2011), entire text; all drawings & US 2011/0221327 A1 & EP 2365594 A2 | 1-15 |
| A | JP 2013-98112 A (NGK Spark Plug Co., Ltd.), 20 May 2013 (20.05.2013), entire text; all drawings (Family: none) | 1-15 |
| A | Microfilm of the specification and drawings annexed to the request of Japanese Utility Model Application No. 122262/1979(Laid-open No. 38988/1981) (Nissan Motor Co., Ltd.), 11 April 1981 (11.04.1981), entire text; all drawings (Family: none) | 1-15 |
| A | JP 4-286890 A (NGK Spark Plug Co., Ltd.), 12 October 1992 (12.10.1992), entire text; all drawings (Family: none) | 6 |

Form PCT/ISA/210 (continuation of second sheet) (January 2015)

**EP 3 264 545 A1**

**Patent documents cited in the description**

- JP 2015036010 A
- JP 2015075551 A
- JP 2015105326 A
- JP 2008045449 A